# EUROPEAN PATENT APPLICATION

(11) **EP 4 614 283 A1**
(43) Date of publication of application: **10.09.2025**
(21) Application number: 23901018.4
(22) Date of filing: 01.12.2023
(51) Int. Cl.: G06F 3/01, G06F 3/04886, G02B 27/01, G06T 19/00, G06F 3/04842, G06F 3/0481

(54) **ELECTRONIC DEVICE AND METHOD FOR IDENTIFYING USER INPUT IN VIRTUAL SPACE**

(30) Priority: 07.12.2022 KR 20220169903; 04.04.2023 KR 20230044410
(71) Applicant: Samsung Electronics Co., Ltd., Suwon-si, Gyeonggi-do 16677 (KR)
(72) Inventor: JANG, Daechan, Suwon-si, Gyeonggi-do 16677 (KR); KIM, Jihyun, Suwon-si, Gyeonggi-do 16677 (KR)
(74) Representative: Appleyard Lees IP LLP
(86) International application number: PCT/KR2023/019657
(87) International publication number: WO 2024/122999

(57) **Abstract**

This wearable device may comprise a communication circuit, a camera, a display and a processor. The processor can be configured to: transmit, to an external electronic device connected through the communication circuit, information about a marker displayed through the external electronic device; display a virtual keyboard through the display on the basis of the marker identified using the information; use information indicating the difference in brightness of each pixel included in an image obtained by the camera, so as to detect, when the virtual keyboard is displayed, the edge of a visual object indicating an external object; display, on the basis that the external object adjacent to the display area of the external electronic device is identified, an indicator, which is projected onto the virtual keyboard and indicates the location of the external object; and execute an input function, based on the virtual keyboard, on the basis of receiving a signal for a touch event related to the display area from the external electronic device through the communication circuit.

## Description

### [Technical Field]

The following descriptions relate to an electronic device and a method for identifying a user input in a virtual environment.

### [Background Art]

In order to provide an enhanced user-experience, electronic devices are being developed that provide an augmented reality (AR) service that displays computer-generated information in association with external objects in the real-world. The electronic device may include a wearable device that may be worn by a user. For example, the electronic device may include AR glasses, and/or a head-mounted device (HMD).

### [Disclosure]

### [Technical Solution]

A wearable device is provided. The wearable device may include communication circuitry. The wearable device may include a camera. The wearable device may include a display. The wearable device may include a processor. The processor may be configured to transmit, to an external electronic device connected via the communication circuitry, information on a marker displayed via the external electronic device. The processor may be configured to display a virtual keyboard via the display based on the marker identified using the information. The processor may be configured to, in a state of displaying the virtual keyboard, detect an edge of a visual object representing an external object, using information representing a brightness difference of each of pixels included in an image of the camera. The processor may be configured to, based on identifying the external object adjacent to a display region of the external electronic device, display an indicator representing a position of the external object projected onto the virtual keyboard. The processor may be configured to, based on receiving a signal for a touch event related to the display region from the external electronic device via the communication circuitry, execute an input function based on the virtual keyboard.

A method performed by a wearable device is provided. The method may include transmitting, to an external electronic device connected via the communication circuitry, information on a marker displayed via the external electronic device. The method may include displaying a virtual keyboard via the display based on the marker identified using the information. The method may include, in a state of displaying the virtual keyboard, detecting an edge of a visual object representing an external object, using information representing a brightness difference of each of pixels included in an image of the camera. The method may include, based on identifying the external object adjacent to a display region of the external electronic device, displaying an indicator representing a position of the external object projected onto the virtual keyboard. The method may include, based on receiving a signal for a touch event related to the display region from the external electronic device via the communication circuitry, executing an input function based on the virtual keyboard.

A wearable device is provided. The wearable device may include communication circuitry. The wearable device may include a camera. The wearable device may include a display. The wearable device may include a processor. The processor may be configured to obtain, from an external electronic device connected via the communication circuitry, information on a marker displayed via the external electronic device. The processor may be configured to display a virtual keyboard via the display based on the marker identified using the information. The processor may be configured to, in a state of displaying the virtual keyboard, identify an external object different from the external electronic device, using an image of the camera. The processor may be configured to, based on identifying the external object adjacent to a display region of the external electronic device, display an indicator representing a position of the external object projected onto the virtual keyboard. The processor may be configured to, based on receiving a signal for a touch event related to the display region from the external electronic device via the communication circuitry, execute an input function based on the virtual keyboard.

A method performed by a wearable device is provided. The method may include obtaining, from an external electronic device connected via the communication circuitry of the wearable device, information on a marker displayed via the external electronic device. The method may include displaying a virtual keyboard via the display of the wearable device based on the marker identified using the information. The method may include, in a state of displaying the virtual keyboard, identifying an external object different from the external electronic device, using an image of the camera of the wearable device. The method may include, based on identifying the external object adjacent to a display region of the external electronic device, display an indicator representing a position of the external object projected onto the virtual keyboard. The method may include, based on receiving a signal for a touch event related to the display region from the external electronic device via the communication circuitry, executing an input function based on the virtual keyboard.

### [Description of Drawings]

FIG. 1 is a block diagram of an electronic device in a network environment according to various embodiments.
FIG. 2A illustrates an example of a perspective view of a wearable device.
FIG. 2B illustrates an example of one or more hardware components disposed in a wearable device.
FIGS. 3A and 3B illustrate an example of an exterior appearance of a wearable device.
FIG. 4 illustrates an example block diagram of a wearable device.
FIG. 5A illustrates an example of an operation of a wearable device displaying a virtual keyboard based on an external electronic device.
FIG. 5B illustrates an example of an operation of a wearable device obtaining an input for a virtual keyboard based on an external electronic device.
FIG. 6 illustrates an example of a flowchart representing an operation of a wearable device displaying a virtual keyboard based on an external electronic device and obtaining an input.
FIG. 7 illustrates an example of a flowchart representing an operation of a wearable device identifying a marker.
FIG. 8A illustrates an example of an operation of a wearable device identifying an area in which a marker is to be disposed in a display region of an external electronic device.
FIG. 8B illustrates an example of a marker for a virtual keyboard.
FIGS. 9A and 9B illustrate an example of a method of displaying a virtual keyboard in a virtual space.
FIG. 10 illustrates an example of a flowchart illustrating an operation of a wearable device identifying an external object.
FIG. 11 illustrates an example of an operation of identifying an external object by a wearable device.
FIG. 12 illustrates an example of a flowchart representing an operation of a wearable device executing an input function based on a signal for a touch event.
FIGS. 13A and 13B illustrate an example of an operation of a wearable device obtaining an input for a virtual keyboard.

### [Mode for Carrying out Invention]

The terms used in the disclosure are merely used to better describe a certain embodiment and may not be intended to limit the scope of other embodiments. A singular expression may include a plural expression, unless the context explicitly dictates otherwise. The terms used herein, including technical and scientific terms, may have the same meanings as those commonly understood by those skilled in the art to which the disclosure pertains. Terms defined in a general dictionary among the terms used in the disclosure may be interpreted as having the same or similar meaning as those in the context of the related art, and they are not to be construed in an ideal or overly formal sense, unless explicitly defined in the disclosure. In some cases, even the terms defined in the disclosure may not be interpreted to exclude embodiments of the disclosure.

In various examples of the disclosure described below, a hardware approach will be described as an example. However, since various embodiments of the disclosure may include a technology that utilizes both the hardware-based approach and the software-based approach, the various embodiments are not intended to exclude the software-based approach.

Further, throughout the disclosure, an expression, such as e.g., 'above (more than)' or 'below (less than)' may be used to determine whether a specific condition is satisfied or fulfilled, but it is merely a description for expressing an example and is not intended to exclude the meaning of 'more than or equal to' or 'less than or equal to'. A condition described as 'more than or equal to' may be replaced with an expression, such as 'more than', a condition described as 'less than or equal to' may be replaced with an expression, such as 'less than', and a condition described as 'more than or equal to and less than' may be replaced with 'more than and less than or equal to', respectively. Furthermore, hereinafter, 'A' to 'B' means at least one of the elements from A (inclusive of A) to B (inclusive of B).

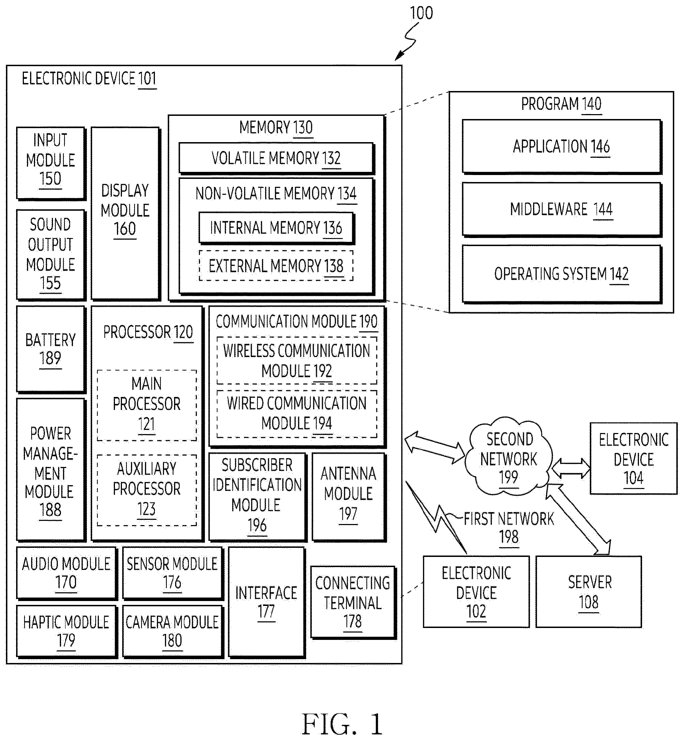

FIG. 1 is a block diagram of an electronic device in a network environment according to an embodiment.

FIG. 1 is a block diagram of an electronic device in a network environment 100 according to an embodiment. Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to address, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may be a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

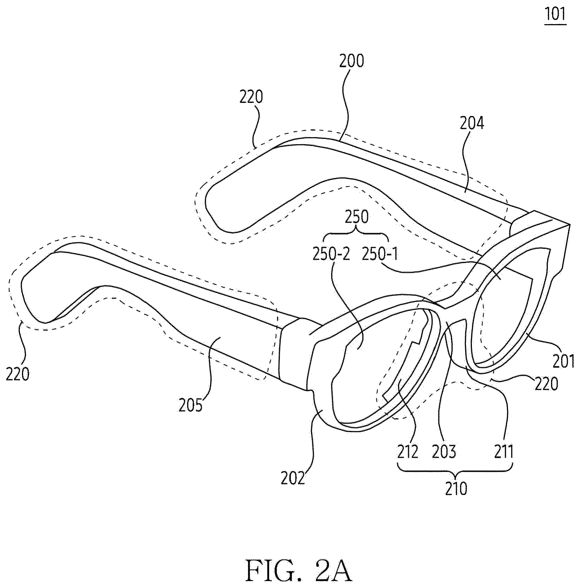

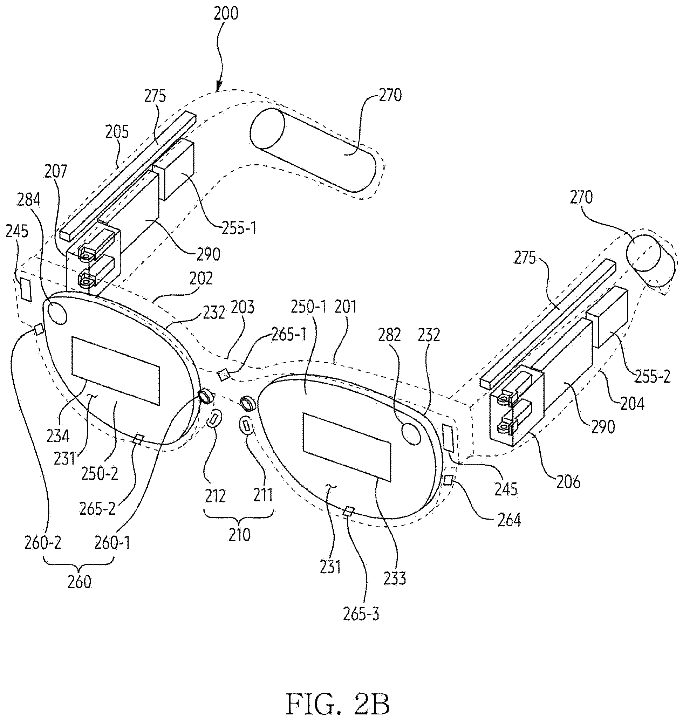

FIG. 2A illustrates an example of a perspective view of a wearable device. FIG. 2B illustrates an example of one or more hardware components disposed in a wearable device.

According to an embodiment, the wearable device 101 may have a shape of glasses that are wearable on a user's body part (e.g., head). The wearable device 101 of FIGS. 2A and 2B may be an example of the electronic device 101 of FIG. 1. The wearable device 101 may include a head mounted display (HMD). For example, a housing of the wearable device 101 may include a flexible material, such as a rubber and/ silicone having a shape in close contact with a part of the user's head (e.g., a part of the face surrounding both eyes). For example, the housing of the wearable device 101 may include one or more straps that may be twined around the user's head, and/or one or more temples that are attachable to an ear of the head.

Referring to FIG. 2A, according to an embodiment, the wearable device 101 may include at least one display 250 and a frame 200 supporting at least one display 250.

According to an embodiment, the wearable device 101 may be worn on a part of a user's body. The wearable device 101 may provide a user wearing the wearable device 101 with augmented reality (AR), virtual reality (VR), or mixed reality (MR) in which augmented reality and virtual reality are mixed together. For example, the wearable device 101 may display a virtual reality image provided from at least one optical device 282 and 284 of FIG. 2B on at least one display 250, in response to a user's designated gesture obtained via motion recognition cameras 260-2 and 264 of FIG. 2B.

According to an embodiment, at least one display 250 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, the at least one display 250 may provide a user with visual information transmitted from external light, and other visual information distinguished from the visual information, through a lens included in at least one display 250. The lens may be formed based on at least one of a Fresnel lens, a pancake lens, or a multi-channel lens. For example, the at least one display 250 may include a first surface 231 and a second surface 232 opposite to the first surface 231. A display region may be formed on the second surface 232 of at least one display 250. When the user wears the wearable device 101, external light is incident on the first surface 231 and transmitted through the second surface 232, thereby being transferred to the user. As another example, the at least one display 250 may display an augmented reality image, in which a virtual reality image provided from at least one optical device 282 and 284 is combined with a reality image delivered via external light, on the display region formed on the second surface 232.

In an embodiment, the at least one display 250 may include at least one waveguide 233 and 234 that diffracts light transmitted from the at least one optical device 282 and 284 and transmits the diffracted light to a user. At least one waveguide 233 and 234 may be formed based on at least one of glass, plastic, or polymer. A nano-pattern may be formed on at least a portion of the outside or inside of the at least one waveguide 233 and 234. The nano-pattern may be formed based on a grating structure having a polygonal and/or curved shape. Light incident to one end of the at least one wave guide 233 and 234 may be propagated to the other end of the at least one wave guide 233 and 234 by the nano-pattern. The at least one wave guide 233 and 234 may include at least one of at least one diffractive element (e.g., diffractive optical element (DOE), holographic optical element (HOE)), or a reflective element (e.g., reflective mirror). For example, the at least one wave guide 233 and 234 may be disposed in the wearable device 101 to guide a screen displayed by the at least one display 250 to the user's eyes. For example, the screen may be transmitted to the user's eyes based on total internal reflection (TIR) generated within the at least one wave guide 233 and 234.

The wearable device 101 may analyze an object included in the real image collected through a photographing camera 245, and combine a virtual object corresponding to an object to be provided with augmented reality among the analyzed objects, thereby displaying the same on the at least one display 250. The virtual object may include at least one of text and an image for various information related to an object included in the real image. The wearable device 101 may analyze the object based on a multi-camera such as a stereo camera. For the object analysis, the wearable device 101 may execute simultaneous localization and mapping (SLAM) using a multi-camera, inertial measurement units (IMUs) (or IMU sensors), and/or a time-of-flight (ToF) sensor. A user wearing the wearable device 101 may watch an image displayed on the at least one display 250.

According to an embodiment, the frame 200 may have a physical structure in which the wearable device 101 may be worn on the user's body. According to an embodiment, when the user wears the wearable device 101, the frame 200 may be configured such that the first display 250-1 and the second display 250-2 may be positioned corresponding to the user's left and right eyes. The frame 200 may support at least one display 250. For example, the frame 200 may support the first display 250-1 and the second display 250-2 to be positioned at positions corresponding to the user's left and right eyes, respectively.

Referring to FIG. 2A, the frame 200 may include an area 220 at least partially in contact with a part of the user's body, when the user wears the wearable device 101. For example, the area 220 in contact with a part of the user's body of the frame 200 may include an area in contact with a part of the user's nose, a part of the user's ear, and/or a part of a side of the user's face. According to an embodiment, the frame 200 may include a nose pad 210 in contact with a part of the user's body. When the wearable device 101 is worn by the user, the nose pad 210 may contact a part of the user's nose. The frame 200 may include a first temple 204 and a second temple 205 in contact with another part of the user's body distinguished from the part of the user's body.

For example, the frame 200 may include a first rim 201 surrounding at least a portion of the first display 250-1, a second rim 202 surrounding at least a portion of the second display 250-2, a bridge 203 between the first rim 201 and the second rim 202, a first pad 211 disposed along a portion of a periphery of the first rim 201 from one end of the bridge 203, a second pad 212 disposed along a portion of a periphery of the second rim 202 from the other one end of the bridge 203, the first temple 204 extending from the first rim 201 and fixed to a portion of the wearer's ear, and the second temple 205 extending from the second rim 202 and fixed to a portion of an ear opposite to the ear. The first pad 211 and the second pad 212 may contact a portion of the user's nose, and the first temple 204 and the second temple 205 may contact a portion of the user's face and a portion of the ear. The temples 204 and 205 may be rotatably connected to the rim via hinge units 206 and 207 of FIG. 2B. The first temple 204 may be rotatably connected with respect to the first rim 201 through a first hinge unit 206 disposed between the first rim 201 and the first temple 204. The second temple 205 may be rotatably connected with respect to the second rim 202 through a second hinge unit 207 disposed between the second rim 202 and the second temple 205. According to an embodiment, the wearable device 101 may identify an external object (e.g., the user's fingertip) touching the frame 200 and/or a gesture performed by the external object, using a touch sensor, a grip sensor, and/or a proximity sensor arranged on at least a portion of the surface of the frame 200.

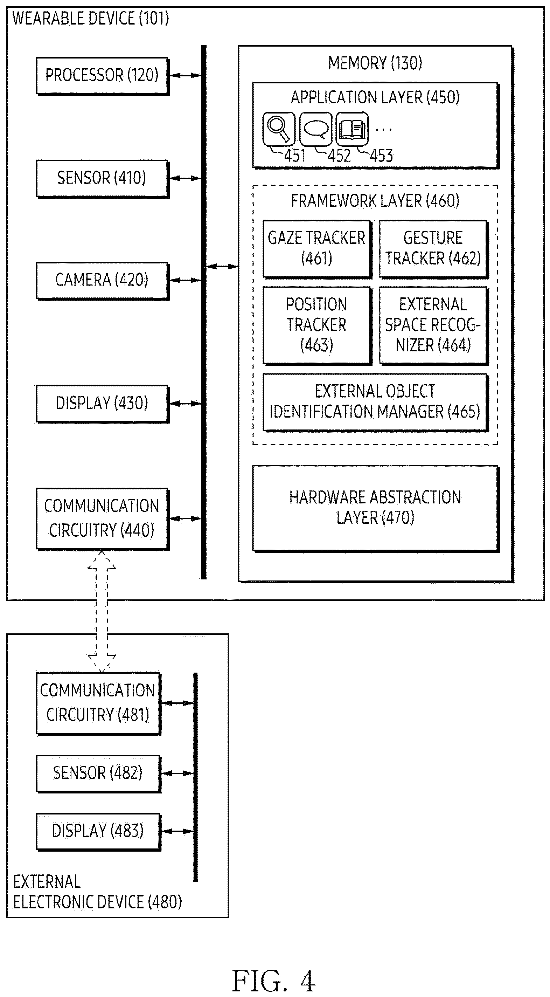

According to an embodiment, the wearable device 101 may include hardware components that perform various functions (e.g., hardware to be described below based on a block diagram of FIG. 4). For example, the hardware components may include a battery module 270, an antenna module 275, at least one optical device 282 and 284, speakers (e.g., speakers 255-1, 255-2), microphones (e.g., microphones 265-1, 265-2, 265-3), a light emitting module (not shown), and/or a printed circuit board (PCB) 290. Various hardware components may be disposed inside the frame 200.

According to an embodiment, the microphones (e.g., microphones 265-1, 265-2, 265-3) of the wearable device 101 may be disposed on at least a portion of the frame 200 to obtain a sound signal. A first microphone 265-1 disposed on the bridge 203, a second microphone 265-2 disposed on the second rim 202, and a third microphone 265-3 disposed on the first rim 201 are shown in FIG. 2B, but the number and arrangement of those microphones 265 are not limited to an embodiment of FIG. 2B. When the number of microphones 265 included in the wearable device 101 is two or more, the wearable device 101 may identify the direction of the sound signal using a plurality of microphones disposed on different portions of the frame 200.

According to an embodiment, the at least one optical device 282 and 284 may project a virtual object onto at least one display 250 to provide various image information to a user. For example, the at least one optical device 282 and 284 may be a projector. The at least one optical device 282 and 284 may be disposed adjacent to the at least one display 250 or may be included in the at least one display 250 as a part of the at least one display 250. According to an embodiment, the wearable device 101 may include a first optical device 282 corresponding to the first display 250-1 and a second optical device 284 corresponding to the second display 250-2. For example, the at least one optical device 282 and 284 may include a first optical device 282 disposed at a periphery of the first display 250-1 and a second optical device 284 disposed at a periphery of the second display 250-2. The first optical device 282 may transmit light to a first wave guide 233 disposed on the first display 250-1, and the second optical device 284 may transmit light to a second wave guide 234 disposed on the second display 250-2.

In an embodiment, the camera 260 may include a photographing camera 245, an eye-tracking camera (ET camera) 260-1, and/or a motion recognition camera 260-2. The photographing camera 245, the eye-tracking camera 260-1, and the motion recognition cameras 260-2 and 264 may be disposed at different positions on the frame 200 and may perform different functions. The eye-tracking camera 260-1 may output data indicating a gaze of a user wearing the wearable device 101. For example, the wearable device 101 may detect the gaze from an image including the user's pupils acquired through the eye-tracking camera 260-1. An example in which the eye-tracking camera 260-1 is disposed toward the user's right eye is illustrated in FIG. 2B, but the embodiment is not limited thereto, and the eye-tracking camera 260-1 may be disposed alone toward the user's left eye or toward all of both eyes.

In an embodiment, the photographing camera 245 may photograph an actual image or background to be matched with a virtual image to implement the augmented reality or mixed reality contents. The photographing camera 245 may capture an image of a specific object existing at a position viewed by the user, and provide the image to at least one display 250. The at least one display 250 may display a single image in which information about a real-world image or background, including an image of the specific object obtained using the photographing camera 245, is superimposed with a virtual image provided through the at least one optical device 282 and 284. In an embodiment, the photographing camera 245 may be disposed on the bridge 203 disposed between the first rim 201 and the second rim 202.

By tracking the gaze of the user wearing the wearable device 101, the eye-tracking camera 260-1 may match the user's gaze with visual information provided to the at least one display 250 to implement substantially a more realistic augmented reality. For example, when the user looks at the front, the wearable device 101 may naturally display environmental information related to the front of the user on the at least one display 250 at a place where the user is located. The eye-tracking camera 260-1 may be configured to capture an image of the user's pupil to determine the user's gaze. For example, the eye-tracking camera 260-1 may receive gaze-detection light reflected from the user's pupil, and track the user's gaze based on the position and movement of the received gaze-detection light. In an embodiment, the eye-tracking camera 260-1 may be disposed at positions corresponding to the user's left and right eyes. For example, the eye-tracking camera 260-1 may be disposed to face a direction in which the user wearing the wearable device 101 is located in the first rim 201 and/or the second rim 202.

The motion recognition cameras 260-2 and 264 may recognize a movement of all or part of the user's body, such as a body, hand, or face of the user to provide a specific event onto a screen provided to the at least one display 250. The motion recognition cameras 260-2 and 264 may recognize a user's motion to acquire a signal corresponding to the motion, and provide a display corresponding to the signal to the at least one display 250. The processor may identify a signal corresponding to the motion and perform a designated function based on the identification. In one embodiment, the motion recognition cameras 260-2 and 264 may be disposed on the first rim 201 and/or the second rim 202.

The camera 260 included in the wearable device 101 is not limited to the eye-tracking camera 260-1 and the motion recognition cameras 260-2 and 264 as described above. For example, the wearable device 101 may use the camera 260 disposed toward the user's FoV to identify an external object included in the FoV. Such an identification of the external object by the wearable device 101 may be performed based on a sensor for identifying a distance between the wearable device 101 and the external object, such as a depth sensor and/or a time of flight (ToF) sensor. The camera 260 disposed toward the FoV may support an autofocus function and/or an optical image stabilization (OIS) function. For example, the wearable device 101 may include the camera 260 (e.g., a face-tracking (FT) camera) disposed toward the face to acquire an image including the face of the user wearing the wearable device 101.

Although not shown herein, according to an embodiment, the wearable device 101 may further include a light source (e.g., LED) that emits light toward a subject (e.g., the user's eye, face, and/or an external object within the FoV) photographed using the camera 260. The light source may include an LED of an infrared wavelength. The light source may be disposed on at least one of the frame 200 or the hinge units 206 and 207.

According to an embodiment, a battery module 270 may supply power to electronic components of the wearable device 101. In an example, the battery module 270 may be disposed within the first temple 204 and/or the second temple 205. For example, the battery module 270 may include a plurality of battery modules 270. The plurality of battery modules 270 may be disposed in the first temple 204 and the second temple 205, respectively. In an example, the battery module 270 may be disposed at one end of the first temple 204 and/or the second temple 205.

An antenna module 275 may transmit a signal or power to the outside of the wearable device 101 or may receive a signal or power from the outside. In an embodiment, the antenna module 275 may be disposed within the first temple 204 and/or the second temple 205. For example, the antenna module 275 may be disposed close to one surface of the first temple 204 and/or the second temple 205.

A speaker 255 may output an audio signal to the outside of the wearable device 101. A sound output module may be referred to as a speaker. In an embodiment, the speaker 255 may be disposed within the first temple 204 and/or the second temple 205 to be arranged adjacent to the user's ear wearing the wearable device 101. For example, the speaker 255 may include a second speaker 255-2 disposed adjacent to the user's left ear, being disposed in the first temple 204, and a first speaker 255-1 disposed adjacent to the user's right ear, being disposed in the second temple 205.

A light emitting module (not shown) may include at least one light emitting element. The light emitting module may emit light of a color corresponding to a specific state or may emit light in a motion corresponding to a specific state, in order to visually provide information on the specific state of the wearable device 101 to the user. For example, when the wearable device 101 needs to be charged, it may emit red light at regular intervals. In an embodiment, the light emitting module may be disposed on the first rim 201 and/or the second rim 202.

Referring to FIG. 2B, according to an embodiment, the wearable device 101 may include a printed circuit board (PCB) 290. The PCB 290 may be included in at least one of the first temple 204 or the second temple 205. The PCB 290 may include an interposer disposed between at least two sub-PCBs. One or more hardware components included in the wearable device 101 (e.g., hardware components shown by different blocks of FIG. 4) may be disposed on the PCB 290. The wearable device 101 may include a flexible PCB (FPCB) for interconnecting the hardware components.

According to an embodiment, the wearable device 101 may include at least one of a gyro sensor, a gravity sensor, and/or an acceleration sensor for detecting a posture of the wearable device 101 and/or a posture of a body part (e.g., head) of a user wearing the wearable device 101. Each of the gravity sensor and the acceleration sensor may measure gravitational acceleration and/or acceleration based on designated three-dimensional axes (e.g., x-axis, y-axis, and z-axis) perpendicular to each other. The gyro sensor may measure an angular velocity of each of the designated three-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 101 may identify a user's motion and/or gesture performed, in order to execute or cease a specific function of the wearable device 101 based on the IMU.

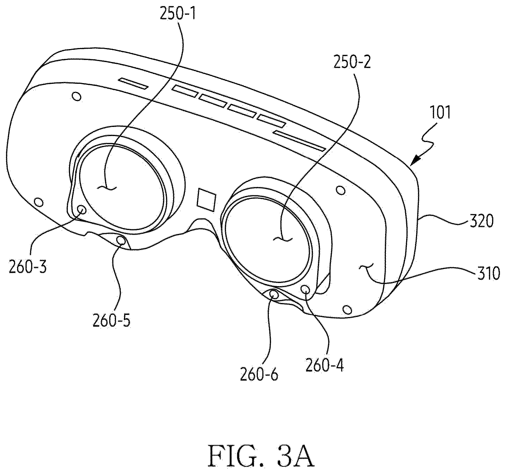

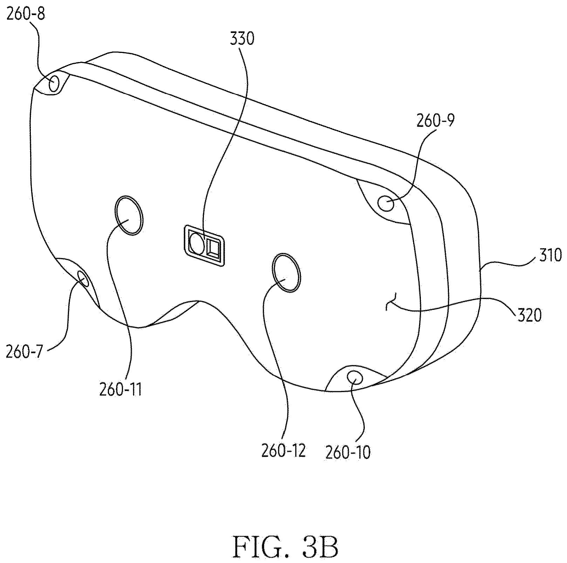

FIGS. 3A and 3B illustrate an example of an exterior appearance of a wearable device.

The wearable device 101 of FIGS. 3A to 3B may be an example of the electronic device 101 of FIG. 1. According to an embodiment, an example of an exterior of a first surface 310 of the housing of the wearable device 101 may be illustrated in FIG. 3A, and an example of an exterior of a second surface 320 opposite to the first surface 310 may be illustrated in FIG. 3B.

Referring to FIG. 3A, according to an embodiment, the first surface 310 of the wearable device 101 may have the form that is attachable onto the user's body part (e.g., the user's face). Although not shown herein, the wearable device 101 may further include a strap for fixing on the user's body part and/or one or more temples (e.g., the first temple 204 and/or the second temple 205 in FIGS. 2A and 2B). A first display 250-1 for outputting an image to the left eye among both eyes of the user and a second display 250-2 for outputting an image to the right eye among both eyes may be disposed on the first surface 310. The wearable device 101 may further include rubber or silicon packing, formed on the first surface 310, for preventing interference by light (e.g., ambient light) different from light emitted from the first display 250-1 and the second display 250-2.

According to an embodiment, the wearable device 101 may include cameras 260-3 and 260-4 for photographing and/or tracking both eyes of the user adjacent to each of the first display 250-1 and the second display 250-2. For example, the cameras 260-3 and 260-4 may be referred to as an ET camera. According to an embodiment, the wearable device 101 may include cameras 260-5 and 260-6 for photographing and/or recognizing a user's face. The cameras 260-5 and 260-6 may be referred to as an FT camera.

Referring to FIG. 3B, on the second surface 320 opposite to the first surface 310 of FIG. 3A may be disposed cameras (e.g., cameras 260-7, 260-8, 260-9, 260-10, 260-11, and 260-12) for acquiring information related to the external environment of the wearable device 101 and/or a sensor (e.g., depth sensor 330). For example, the cameras 260-7, 260-8, 260-9, and 260-10 may be disposed on the second surface 320 to recognize an external object. For example, using the cameras 260-11 and 260-12, the wearable device 101 may acquire an image and/or a video to be transmitted to each of the user's both eyes. The camera 260-11 may be disposed on the second surface 320 of the wearable device 101 to obtain an image to be displayed through the second display 250-2 corresponding to the right eye of both eyes. The camera 260-12 may be disposed on the second surface 320 of the wearable device 101 to obtain an image to be displayed through the first display 250-1 corresponding to the left eye of both eyes.

According to an embodiment, the wearable device 101 may include a depth sensor 330 disposed on the second surface 320 to identify a distance between the wearable device 101 and an external object. Using the depth sensor 330, the wearable device 101 may obtain spatial information (e.g., a depth map) for at least part of FoV of the user wearing the wearable device 101.

Although not shown herein, a microphone for acquiring sound output from an external object may be disposed on the second surface 320 of the wearable device 101. The number of microphones may be one or more depending on embodiments.

As described above, according to an embodiment, the wearable device 101 may include hardware components (e.g., cameras 260-7, 206-8, 260-9, 260-10, and/or a depth sensor 330) for identifying a body part including a user's hand. The wearable device 101 may identify a gesture represented by a motion of a body part. The wearable device 101 may provide a user wearing the wearable device 101 with a UI based on the identified gesture. The UI may support a function for editing an image and/or video stored in the wearable device 101. The wearable device 101 may communicate with an external electronic device different from the wearable device 101 in order to more accurately identify the gesture.

FIG. 4 illustrates an example block diagram of a wearable device. The wearable device 101 of FIG. 4 may be an example of the electronic device 101 of FIG. 1 and the wearable device 101 of FIGS. 2A to 3B.

Referring to FIG. 4, an exemplary situation is illustrated in which the wearable device 101 and the external electronic device 480 are connected to each other, based on a wired network and/or a wireless network. For example, the wired network may include a network such as the Internet, a local area network (LAN), a wide area network (WAN), or a combination thereof. For example, the wireless network may include a network such as LTE (long term evolution), 5G NR (New Radio), WiFi (wireless facility), Zigbee, NFC (near field communication), Bluetooth, Bluetooth low-energy (BLE), or a combination thereof. Although the wearable device 101 and the external electronic device 480 are shown herein as being directly connected, the wearable device 101 and the external electronic device 480 may be indirectly connected through one or more routers and/or access points (Aps).

Referring to FIG. 4, according to an embodiment, the wearable device 101 may include at least one of a processor 120, a memory 130, a sensor 410, a camera 420, a display 430, or a communication circuit 440. The processor 120, the memory 130, the camera 420, the display 430, and the communication circuit 440 may be electronically and/or operatively coupled with each other by a communication bus. Hereinafter, operative coupling of hardware components may mean that a direct or indirect connection between the hardware components is established by wire or wirelessly, so that among those hardware components a second hardware component is controlled by a first hardware component. Although they are shown based on different blocks, the embodiments are not limited thereto, and some of the hardware components shown in FIG. 4 (e.g., at least some of the processor 120, the memory 130, and the communication circuit 440) may be included in a single integrated circuit such as, e.g., a system on chip (SoC). The type and/or number of the hardware components included in the wearable device 101 is not limited to those shown in FIG. 4. For example, the wearable device 101 may include only some of the hardware components shown in FIG. 4.

According to an embodiment, the processor 120 of the wearable device 101 may include a hardware component for processing data based on one or more instructions. The hardware component for processing data may include, for example, an arithmetical and logical unit (ALU), a floating point unit (FPU), and a field programmable gate array (FPGA). For example, the hardware component for processing data may include a central processing unit (CPU), a graphics processing unit (GPU), a digital signal processing (DSP), and/or a neural processing unit (NPU). The number of processors 120 may be one or more. For example, the processor 120 may have a structure of a multi-core processor such as a dual core, a quad core, or a hexa core. The processor 120 of FIG. 4 may include the processor 120 of FIG. 1.

According to an embodiment, the memory 130 of the wearable device 101 may include a hardware component for storing data and/or instructions input to the processor 120 and/or output from the processor 120. The memory 130 may include, for example, a volatile memory such as a random-access memory (RAM), and/or a non-volatile memory such as a read-only memory (ROM). The volatile memory may include, for example, at least one of dynamic RAM (DRAM), static RAM (SRAM), cache RAM, and pseudo SRAM (PSRAM). The non-volatile memory may include, for example, at least one of programmable ROM (PROM), erasable PROM (EPROM), electrically erasable PROM (EEPROM), a flash memory, a hard disk, a compact disk, or an embedded multimedia card (eMMC). The memory 130 of FIG. 4 may include the memory 130 of FIG. 1.

According to an embodiment, the sensor 410 of the wearable device 101 may include at least one sensor. For example, the sensor 410 may include at least a part of the sensor module 176 of FIG. 1. For example, the sensor 410 may include an IMU (or an IMU sensor). For example, the sensor 410 may include a gyro sensor, a gravity sensor, and/or an acceleration sensor.

According to an embodiment, the camera 420 of the wearable device 101 may include one or more optical sensors (e.g., charged coupled device (CCD) sensor, complementary metal oxide semiconductor (CMOS) sensor) that generate an electrical signal representing color and/or brightness of light. A plurality of optical sensors included in the camera 420 may be disposed in the form of a two-dimensional array. The camera 420 may substantially simultaneously acquire an electrical signal of each of the plurality of optical sensors to generate an image from a plurality of pixels arranged in two dimensions, corresponding to light reaching the optical sensors of the two-dimensional array. For example, photographic data captured using the camera 420 may mean one image acquired from the camera 420. For example, video data captured using the camera 420 may mean a sequence of multiple images acquired from the camera 420 according to a designated frame rate. The wearable device 101 according to an embodiment may further include a flash light disposed toward a direction in which the camera 420 receives light and outputting light in the direction. The number of cameras 420 included in the wearable device 101 may be one or more, as described above with reference to FIGS. 2A and 2B, and/or 3A and 3B.

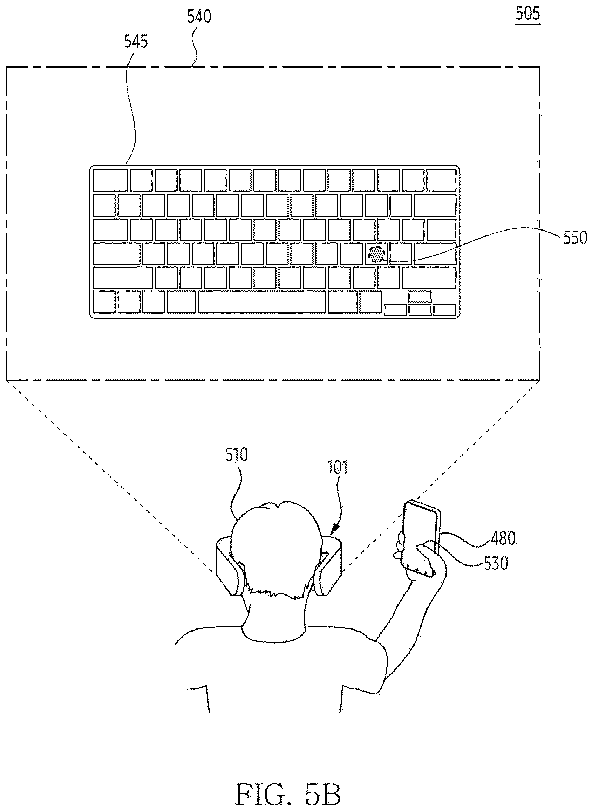

According to an embodiment, the display 430 of the wearable device 101 may output visualized information (for example, screens of FIG. 5B, FIG. 8B, FIG. 9A, FIG. 9B, FIG. 11, FIG. 13A, and FIG. 13B) to the user. The number of displays 430 included in the wearable device 101 may be one or more. For example, the display 430 may output visualized information to the user, under control of the processor 120 and/or a graphic processing unit (GPU) (not shown). The display 430 may include a flat panel display (FPD) and/or electronic paper. The FPD may include a liquid crystal display (LCD), a plasma display panel (PDP), a digital mirror device (DMD), one or more light emitting diodes (LEDs), and/or micro LEDs. The LED may include an organic LED. The display 430 of FIG. 4 may include the display module 160 of FIG. 1.

In an embodiment, light transmission may occur in at least a portion of the display 430. The wearable device 101 may provide a user experience related to augmented reality, by providing a user with a combination of light output through the display 430 and light passing through the display 430. As described above with reference to FIGS. 2A and 2B, and/or 3A and 3B, the display 430 of the wearable device 101 according to an embodiment may have a structure for covering the entire field-of-view (FoV) of the user or emitting light toward the FoV, in a state of being worn on a user's body part such as a head. Although not shown herein, the wearable device 101 may include another output means for outputting information in a form other than a visual form or an audible form. For example, the wearable device 101 may include at least one speaker for outputting an audio signal, and/or a motor (or an actuator) for providing haptic feedback based on vibration.

According to an embodiment, the communication circuit 440 of the wearable device 101 may include hardware components for supporting transmission and/or reception of an electrical signal between the wearable device 101 and the external electronic device 480. The communication circuit 440 may include, for example, at least one of a modem ( MODEM), an antenna, and an optical/electronic (O/E) converter. The communication circuit 440 may support transmission and/or reception of an electrical signal based on various types of communication means such as, e.g., Ethernet, Bluetooth, Bluetooth low energy (BLE), ZigBee, LTE (long term evolution), or 5G NR (new radio). The communication circuit 440 of FIG. 4 may include the communication module 190 and/or the antenna module 197 of FIG. 1.

Although not shown herein, according to an embodiment, the wearable device 101 may include an output means for outputting information in a form other than the visualized form. For example, the wearable device 101 may include a speaker for outputting an acoustic signal. For example, the wearable device 101 may include a motor for providing haptic feedback based on vibration.

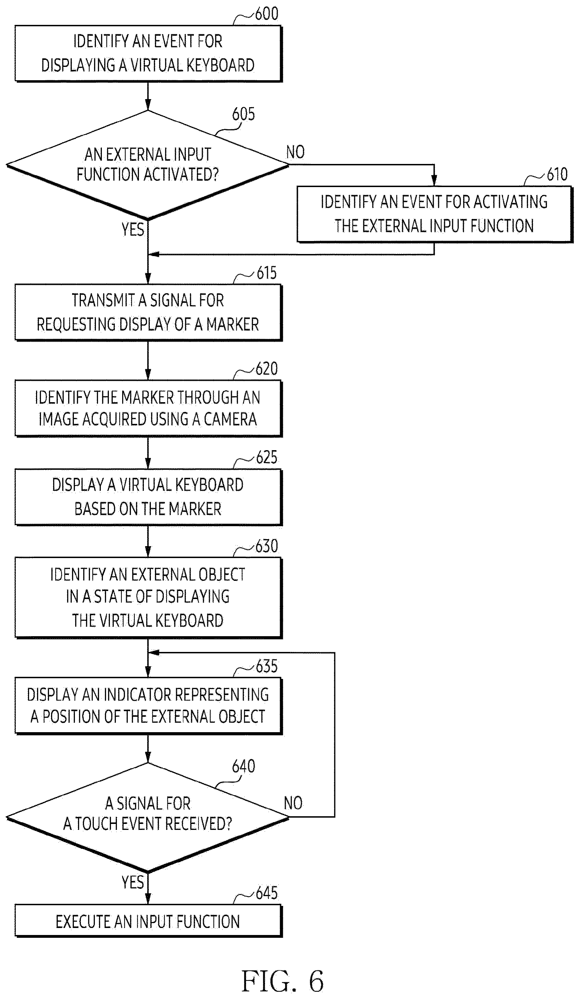

Referring to FIG. 4, according to an embodiment, in the memory 130 of the wearable device 101 may be stored one or more instructions (or commands) indicating operations and/or actions to be performed on data by the processor 120 of the wearable device 101. A set of one or more instructions may be referred to as a program, firmware, an operating system, a process, a routine, a sub-routine and/or an application. As used herein, in case where a certain application is installed in an electronic device (e.g., the wearable device 101), it may mean that one or more instructions provided in the form of an application are stored in the memory 130, wherein the one or more applications are stored in an executable format (e.g., a file having an extension designated by the operating system of the wearable device 101) that can be executed by a processor of the electronic device. According to an embodiment, the wearable device 101 may execute one or more instructions stored in the memory 130 to perform operations of FIGS. 6, 7, 10, and 12.

Referring to FIG. 4, programs installed in the wearable device 101 may be classified into any one of different layers including an application layer 450, a framework layer 460, and/or a hardware abstraction layer (HAL) 470, based on a target. For example, programs (e.g., drivers) designed to target the hardware component (e.g., the camera 420, the display 430, and/or the communication circuit 440) of the wearable device 101 may be classified in the hardware abstraction layer 470. For example, programs (e.g., a gaze tracker 461, a gesture tracker 462, a position tracker 463, an external space recognizer 464, and/or an external object identification manager 465) designed to target at least one of the hardware abstraction layer 470 and/or application layer 450 may be classified in the framework layer 460. Programs classified as the framework layer 460 may provide an application programming interface (API) that is executable based on other programs.

Referring to FIG. 4, a program designed to target a user who controls the wearable device 101 may be classified in the application layer 450. For example, a program classified as the application layer 450 may include at least one of an application 451, a message application 452, or a note application 453. However, the embodiment of the present disclosure is not limited thereto. For example, a program classified as the application layer 450 may call an API to cause execution of a function supported by programs classified as the framework layer 460.

Referring to FIG. 4, the wearable device 101 may process information related to a gaze of a user wearing the wearable device 101, based on the execution of the gaze tracker 461 in the framework layer 460. For example, the wearable device 101 may acquire, through the camera 420, an image representing a real world corresponding to a position identified based on information related to the gaze. For example, the image may include a visual object representing an external electronic device 480. For example, the image may include a first visual object representing the external electronic device 480 and a second visual object representing an external object.

Referring to FIG. 4, the wearable device 101 may identify a motion of a designated body part including the hand, based on the execution of the gesture tracker 462 in the framework layer 460. For example, the wearable device 101 may acquire frames including the designated body part from the camera 420 based on the execution of the gesture tracker 462. The camera 420 may represent at least one example of the camera 260-1, the camera 260-2, the camera 264, or the cameras 260-7, 260-8, 260-9, and 260-10. For example, based on the execution of the gesture tracker 462, the wearable device 101 may acquire the frames based on at least one of spatial information acquired through the depth sensor 330, position information acquired based on the position tracker 463, or information on an external space acquired based on the external space recognizer 464. Based on the motion and/or posture of the designated body part indicated by the frames, the wearable device 101 may identify a gesture performed by the designated body part. According to an embodiment, the wearable device 101 may identify an event for displaying a virtual keyboard, based on the gesture identified based on the execution of the gesture tracker 462.

Referring to FIG. 4, the wearable device 101 may identify the position and direction of the wearable device 101 based on the execution of the position tracker 463 in the framework layer 460. For example, the wearable device 101 may identify the position and direction of the wearable device 101, using at least one of the camera 260-1, the camera 260-2, the camera 264, or the cameras 260-7, 260-8, 260-9, or 260-10, based on the execution of the position tracker 463. For example, the wearable device 101 may identify the position and direction of the wearable device 101, based on information acquired based on the IMU sensor. The position and direction may be related to the motion of the user's head while the wearable device 101 is worn by the user. For example, the wearable device 101 may identify the direction of the wearable device 101 that substantially matches the direction of the head. Identifying the position and direction may be referred to as head tracking, positional tracking or positional head tracking. The wearable device 101 may identify the motion of the wearable device 101 based on sensor data of the sensor 410 including the IMU. According to an embodiment, the wearable device 101 may identify an event for displaying a virtual keyboard, based on the motion identified based on the execution of the position tracker 463.

Referring to FIG. 4, the wearable device 101 may include the wearable device 101 or obtain information on an external space adjacent to the wearable device 101, based on execution of the external space recognizer 464 in the framework layer 460. The wearable device 101 may obtain the information using the camera 420 and/or the sensor 410. Referring to FIG. 4, while the external space recognizer 464 is executed, the wearable device 101 may identify a virtual space mapped to the external space, based on the information acquired based on the external space recognizer 464. Based on the execution of the external space recognizer 464, the wearable device 101 may identify the position and/or direction of the wearable device 101 within the external space. For example, based on the execution of the external space recognizer 464 and/or the position tracker 463, the wearable device 101 may perform simultaneous localization and mapping (SLAM) for recognizing the external space and the position of the wearable device 101 within the external space.

Referring to FIG. 4, the wearable device 101 may identify an image for the external space (or the real world) using the camera 420, based on execution of the external object identification manager 465 in the framework layer 460. According to an embodiment, based on the execution of the external object identification manager 465, the wearable device 101 may identify a visual object representing the external electronic device 480 included in the image. Further, based on the execution of the external object identification manager 465, the wearable device 101 may identify a detection area related to a display region of the external electronic device 480 based on a third visual object representing a marker included in the image. The marker may represent visual information displayed by the external electronic device 480 through the display region. The third visual object may be a visual object representing the marker included in the image. For example, the detection area may include a virtual space extending from the display region.

According to an embodiment, based on the execution of the external object identification manager 465, the second visual object in the detection area may be identified. For example, the second visual object may represent a visual object representing an external object different from the external electronic device 480. For example, based on the execution of the external object identification manager 465, the wearable device 101 may identify an edge of the second visual object, based on information indicating a difference in brightness of each pixel included in the image. For example, the edge may be identified based on information indicating the difference in brightness and a reference value for identifying the external object. For example, the reference value may be identified based on at least one of a sharpness, a size, or a length of the second visual object included in the image.

According to an embodiment, based on the execution of the external object identification manager 465, the wearable device 101 may identify the position of the external object based on the second visual object. For example, the wearable device 101 may identify the position information of the second visual object, based on the first visual object representing the external electronic device 480 and the marker in the display region of the image. For example, the position information may include relative position information of the second visual object with respect to a reference point. For example, the reference point may include a vertex of the upper left in the display region of the external electronic device 480.

According to an embodiment, based on the execution of the external object identification manager 465, the wearable device 101 may obtain information on an indicator representing the position of the external object based on the position information . The indicator may be displayed on the display 430 of the wearable device 101. For example, the indicator may be displayed through the display 430, being superimposed on the virtual keyboard. For example, the indicator may indicate a visual object representing the position of the external object projected onto the virtual keyboard. The indicator may be displayed in a state that the external object causes a hovering input on the display region of the display 483 of the external electronic device 480.

According to an embodiment, the wearable device 101 may receive a signal for a touch event from the external electronic device 480 via the communication circuit 440. For example, the wearable device 101 may receive the signal including information on an input including a contact point by the external object on a display region of the display 483 of the external electronic device 480. According to an embodiment, the wearable device 101 may identify the touch event through a software application for displaying the virtual keyboard that causes execution of a function supported by at least one program of the framework layer 460. The wearable device 101 may provide information (or value) on the touch event identified through the software application for displaying the virtual keyboard, to another software application including a software application displaying the virtual space. The wearable device 101 may execute an input function based on the virtual keyboard, based on information (or value) on the touch event. For example, the input function may include outputting a specific value and execution of a specific operation (e.g., deletion, move, change). Referring to the above description, the wearable device 101 according to embodiments of the disclosure may display a virtual keyboard and identify an area of an external object, thereby identifying an input to the virtual keyboard.

Extended reality (XR) is a technology for providing a user experience with increased immersion by performing processing on a real environment. For example, the XR may include augmented reality (AR), virtual reality (VR), and mixed reality (MR). For example, the electronic device for AR may augment and provide information based on a real object. For example, the electronic device may include an AR glasses for providing information to a user based on the real object. Hereinafter, the electronic device may be referred to as the wearable electronic device 101.

Hereinafter, for convenience of explanation, a video see-through (VST) method for generating and providing new information about an actual environment viewed through a camera will be described. However, the present disclosure is not limited thereto. The disclosure may also be applied to an optical see-through (OST) method of providing with adding the generated information to an environment actually visible to the eye.

In an AR (or VR) environment, a method of inputting text with respect to the above virtual space provided by the wearable device 101 may include inputting through a virtual keyboard or inputting by voice recognition. The input through the virtual keyboard may indicate a method of inputting text by displaying a virtual object representing a keyboard in the virtual space through a display (e.g., the display 430) and obtaining a user's input for the display. The input by the voice recognition may indicate a method of inputting text by identifying an input based on voice information acquired through a microphone by the wearable device 101.

However, it may be difficult for such an input by voice recognition to accurately obtain the text intended by the user, depending on the limitation of the rate (recognition rate) at which the voice information can be accurately recognized.

Further, the input through the virtual keyboard in the virtual space may cause a delay in displaying a response to a user's touch input, which may result in some inconvenience due to a relatively slow input speed. Further, since the input through the virtual keyboard acquires the input based on the virtual object identified with a hand tracking method, any text different from the user's intention may be input. For example, the wearable device 101 may track a hand including a plurality of fingers of the user using the hand tracking method and display a virtual object corresponding to the hand in the virtual space. However, with the hand tracking method, the accuracy of recognizing the hand may be reduced due to a portion covered by an external electronic device (e.g., a finger), and the accuracy may be more reduced in a certain environment (e.g., a dark environment). Further, the hand tracking method may consume a lot of resources of the wearable device 101 as it may be required an operation, such as deep learning, based on a processor (e.g., the processor 120) included in the wearable device 101. Furthermore, the hand tracking method may result in decrease in accuracy of recognizing the hand, depending on conditions such as the shape and color of the hand.

To address the problem of inputting through the virtual keyboard, a VST method may be used. For example, when a text input is required, the wearable device 101 may display a visual object representing a keyboard displayed on the external electronic device in an actual environment through a partial area of the display while displaying a virtual space through the display (e.g., the display 430). While displaying the virtual space, the state in which the actual environment is displayed through some areas may be referred to as a pass-through mode of a VST method. Using the pass-through mode, the wearable device 101 may obtain a text input in the virtual space through an input to an external electronic device in the actual environment. However, even in the case of the above method, there may be limitations in image quality, perspective, and current leakage occurring in conditions of the actual environment (e.g., in a dark state).

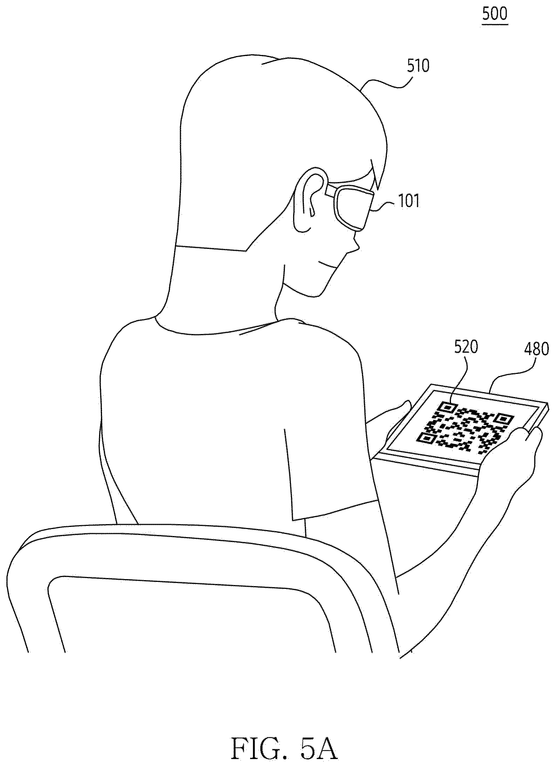

As described above, in order to address the problems of a virtual keyboard using the hand tracking, the voice recognition method, and the VST method, the disclosure proposes an input acquisition method of the wearable device 101 using an external electronic device (e.g., the external electronic device 480). Hereinafter, in FIGS. 5A and 5B, an example in which the wearable device 101 according to an embodiment displays a virtual keyboard and identifies an input based on an external object will be described.

FIG. 5A illustrates an example of an operation in which a wearable device displays a virtual keyboard based on an external electronic device. The wearable device 101 of FIG. 5A may include the wearable device 101 of FIG. 4. The external electronic device 480 of FIG. 5A may include the external electronic device 480 of FIG. 4.

Referring to FIG. 5A, an example 500 of the wearable device 101 displaying a virtual keyboard based on information obtained from the external electronic device 480 is illustrated. Although not shown in FIG. 5A, the example 500 may indicate a state in which connection with the external electronic device 480 has been established. For example, the wearable device 101 may communicate with the external electronic device 480 via the communication circuit 440. According to an embodiment, the wearable device 101 may obtain information on the external electronic device 480, while establishing a connection with the external electronic device 480. For example, the information on the external electronic device 480 may include information on the size of the display region of the display 483 of the external electronic device 480. The size of the display region may represent a combination of a length in a first direction (e.g., horizontal) and a length in a second direction (e.g., vertical).

Referring to the example 500, according to an embodiment, the wearable device 101 may identify an event for displaying a virtual keyboard. For example, the wearable device 101 may identify the event based on a sensor 410 included in the wearable device 101 or a physical button of the wearable device 101. For example, the event may include an event for displaying the virtual keyboard in order to input text in the virtual space provided by the wearable device 101. The event may include a motion of the wearable device 101, a gesture of the user 510, or a touch input thereof. For example, the touch input may include a touch input for a virtual object for inputting text in the virtual space. The motion or the gesture may include a designated operation for inputting text in the virtual space.

According to an embodiment, the wearable device 101 may identify whether an external input function is activated. The external input function may represent a function of obtaining an input for the virtual keyboard through the external electronic device 480. For example, the external input function may include displaying an indicator representing a position of the external object projected onto the virtual keyboard, in response to a hovering input of an external object to the external electronic device 480. For example, the external input function may include executing an input function based on the virtual keyboard, based on an input (or a touch event) including a contact point with the external electronic device 480.

According to an embodiment, when the external input function is deactivated, the wearable device 101 may identify an event (hereinafter, an activation event) for activating the external input function. For example, the activation event may include a signal transmitted to the wearable device 101 in order to inform that the external electronic device 480 has changed the display (e.g., display 483) in OFF state to ON state. Further, for example, the activation event may include a user 510 input to a virtual object for activating the external input function in the virtual space. For example, the input may include a touch input, motion, or gesture. For example, the virtual object may be included in a user interface of a software application for setting the wearable device 101. For example, the virtual object may be included in a user interface of a software application for displaying a virtual space provided by the wearable device 101.

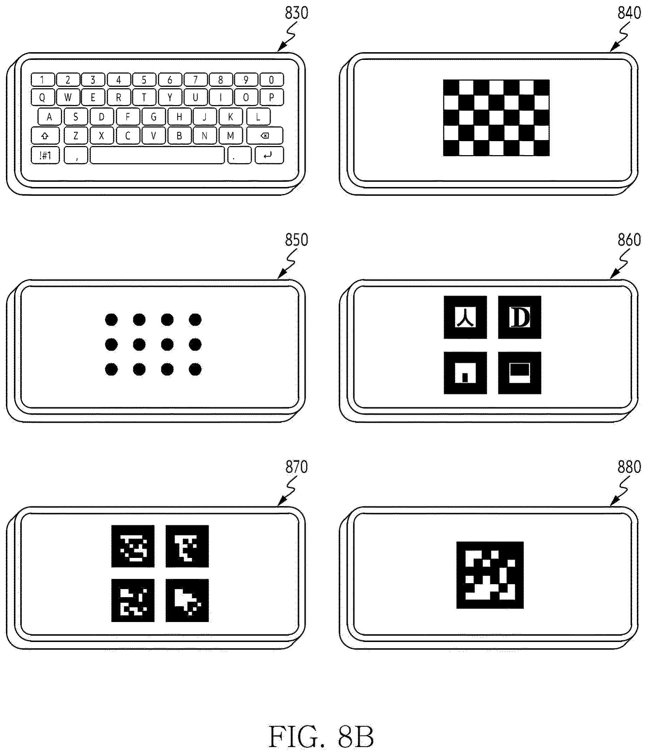

According to an embodiment, when the external input function is activated, the wearable device 101 may transmit a signal to request displaying of a marker 520 to the external electronic device 480. Hereinafter, the marker 520 may be referred to as a first marker. For example, the wearable device 101 may display the virtual keyboard and transmit, to the external electronic device 480, a signal to request displaying of the marker 520 for setting the position of the virtual keyboard. For example, the signal for requesting display of marker 520 may include information on the marker 520. For example, the information on the marker 520 may include at least one of a list of markers 520 identifiable by wearable device 101, information on a shape of each of the markers 520 included in the list, and information on an area in which the markers in the display region of external electronic device 480 are to be disposed. For example, the shape of marker 520 may represent a pattern making up the marker 520. Specific details of various examples of the marker 520 will be described with reference to FIG. 8B.

According to an embodiment, the wearable device 101 may identify the marker 520 displayed through the display region (e.g., the display region of the display 483) of the external electronic device 480. For example, the wearable device 101 may acquire an image including a first visual object representing the external electronic device 480 through the camera 420. For example, the image may include the first visual object representing the external electronic device 480 and a third visual object representing the marker 520.

According to an embodiment, the wearable device 101 may identify the marker 520 using the information on the marker 520. For example, the wearable device 101 may identify whether the shape of the marker 520 included in the information on the marker 520 matches the third visual object representing the marker 520 included in the image. Based on identifying that the shape of the marker 520 matches the third visual object, the wearable device 101 may display the virtual keyboard in the virtual space. Referring to FIG. 5B, the wearable device 101 may display a virtual keyboard 545 on a screen 540 displaying a virtual space.

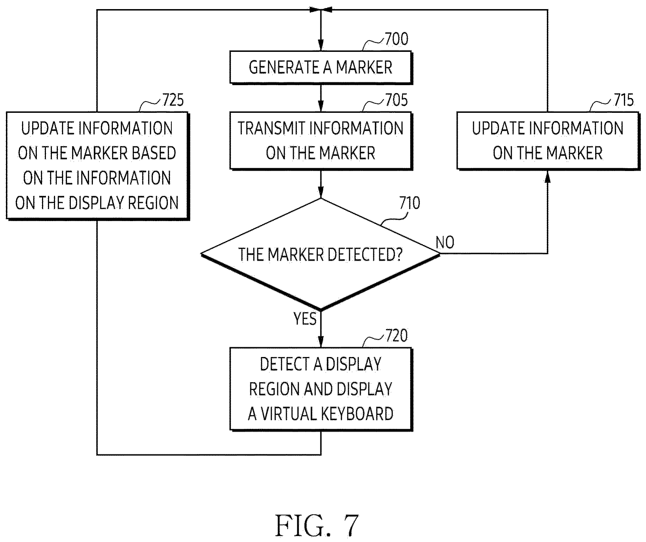

According to an embodiment, when identifying that the information on the shape of the marker 520 is not consistent with the third visual object, the wearable device 101 may transmit a signal including information on another marker to the external electronic device 480. For example, the other marker may represent a marker different from the first marker. Hereinafter, the other marker may be referred to as a second marker. The external electronic device 480 that has acquired the information on the second marker may display the second marker. The wearable device 101 may acquire an image including a fourth visual object displaying the second marker through the camera 420, and may identify the virtual keyboard in the virtual space as it identifies that the fourth visual object representing the second marker matches the information on the second marker. Accordingly, the external electronic device 480 may display the marker 520 through the display region of the external electronic device 480. Specific details related thereto will be described below with reference to FIG. 7.

Referring to the above description, the wearable device 101 may display the virtual keyboard in the virtual space displayed through the display 430, based on the marker 520 displayed through the connected external electronic device 480. Hereinafter, in FIG. 5B, a method of obtaining a touch input for the virtual keyboard by the wearable device 101 will be described.

FIG. 5B illustrates an example of an operation of a wearable device acquiring an input for a virtual keyboard based on an external electronic device. The wearable device 101 of FIG. 5B may include the wearable device 101 of FIG. 4. The external electronic device 480 of FIG. 5B may include the external electronic device 480 of FIG. 4.

Referring to FIG. 5B, an example 505 of the wearable device 101 acquiring an input for a virtual keyboard based on a touch input to the external electronic device 480 is illustrated. Referring to the example 505, the wearable device 101 may display a virtual keyboard 545 through a screen 540 displaying a virtual space. For example, the wearable device 101 may display the virtual keyboard 545 based on the information about the virtual keyboard 545 stored in the memory 130. The information about the virtual keyboard 545 may include a layout for displaying the virtual keyboard 545. The layout may include information on an arrangement of visual objects representing buttons of the virtual keyboard 545. For example, the information on the arrangement may include QWERTY, Dvorak, two-set and/or three-set keyboard systems. Alternatively, the information on the arrangement may include an arrangement used in an ergonomic keyboard or a split keyboard. However, the present disclosure is not limited thereto.

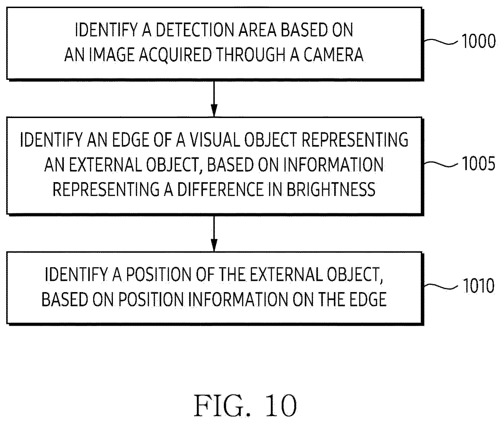

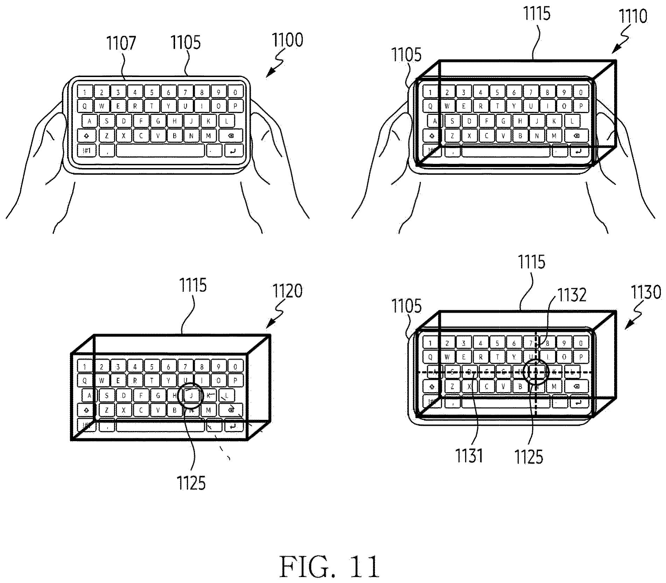

According to an embodiment, the wearable device 101 may acquire an image including a second visual object representing an external object 530 and a first visual object representing an external electronic device 480, through the camera 420. For example, the external object 530 may include a component capable of performing an input to the external electronic device 480 such as a finger of the user 510 or a pen. For example, the wearable device 101 may identify a display region of the external electronic device 480 from the first visual object in the image. For example, the wearable device 101 may identify a detection area extending from the display region of the external electronic device 480 and including a virtual space. For example, the wearable device 101 may identify the external object 530, based on information indicating a difference in brightness of each of pixels included in the image and the second visual object located in the detection area. For example, the wearable device 101 may identify an edge of the second visual object based on the information indicating the difference in brightness. A method of identifying the edge based on the information indicating the difference in brightness may be referred to as an edge detection method. According to an embodiment, when the edge detection method is used, the wearable device 101 may deactivate the hand tracking method. For example, the wearable device 101 may stop the hand tracking in response to displaying the virtual keyboard. Details of the edge detection method will be described with reference to FIGS. 10 and 11 below.

According to an embodiment, the wearable device 101 may display an indicator 550 based on the identified edge. For example, the wearable device 101 may display the indicator 550 indicating the position of the external object 530 with respect to the external electronic device 480. For example, the wearable device 101 may display the indicator 550 indicating the position of the external object 530 projected onto the virtual keyboard 545, in response to identifying the external object 530 (e.g., the external object 530 located within the detection area) adjacent to the display region of the external electronic device 480. For example, the indicator 550 may be displayed to be superimposed on the virtual keyboard 545.

According to an embodiment, the wearable device 101 may display a movement of the external object 530 with respect to the external electronic device 480 through the indicator 550. For example, when the user 510 causes a hovering input by the external object 530 with respect to the display region of the external electronic device 480, the wearable device 101 may display the indicator 550 corresponding to the hovering input on the virtual keyboard 545. For example, the hovering input may indicate that the external object 530 is located within the detection area associated with the display region. For example, when the user 510 changes (or moves) the position of the hovering input by the external object 530, the position at which the indicator 550 is displayed may be changed.

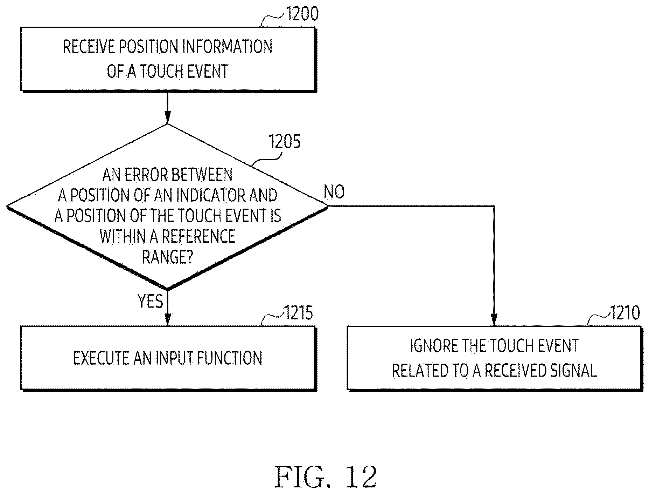

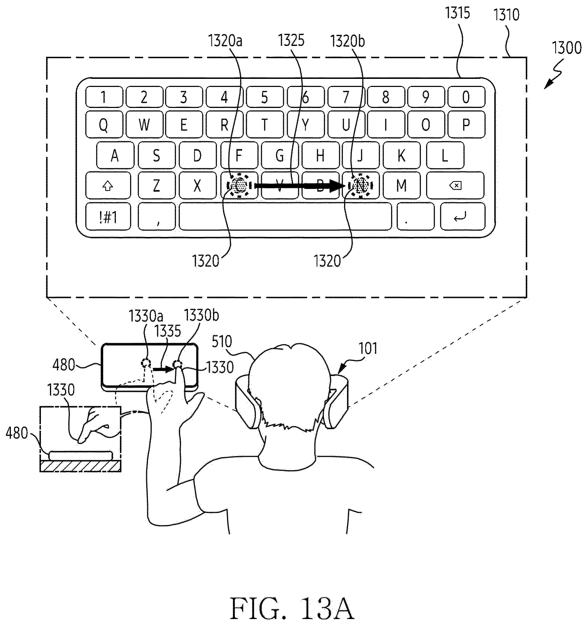

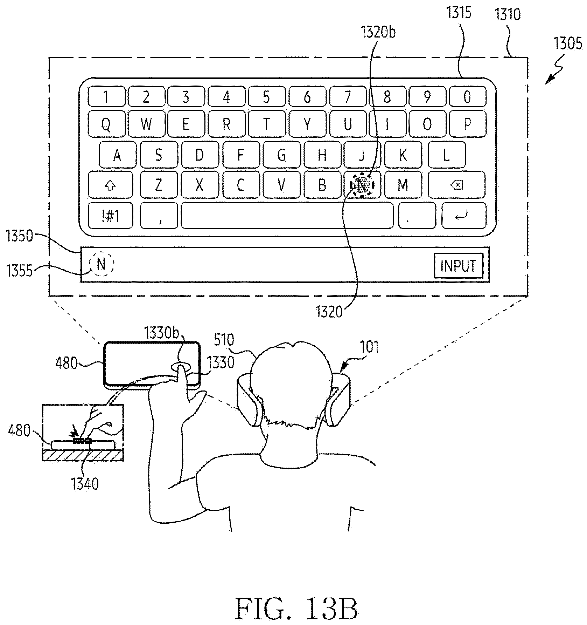

According to an embodiment, the wearable device 101 may execute an input function based on the virtual keyboard 545, based on receiving a signal for a touch event of the external object 530 with respect to the external electronic device 480. For example, the wearable device 101 may receive a signal for the touch event of the external object 530 with respect to the external electronic device 480. For example, the touch event may include an input of the external object 530 including a contact point for the display region of the display 483 of the external electronic device 480. The external electronic device 480 may transmit the signal for the touch event to the wearable device 101, in response to identifying the input including the contact point. The wearable device 101 may identify the signal as an input for a virtual button in the virtual keyboard 545 corresponding to the position of the indicator 550, based on receiving the signal. The virtual button may be included in a plurality of virtual buttons included in the virtual keyboard 545. According to an embodiment, the wearable device 101 may identify that the touch event is an input intended by the user 510, based on an error between information on the touch event (e.g., the position of the contact point) and the position of the indicator 550, and a reference range. According to an embodiment, when identifying that the touch event is an input intended by the user 510, the wearable device 101 may execute the input function corresponding to the input to the virtual button. For example, the input function may include an output of a specific value and execution of a specific operation (e.g., delete, move, change). Specific detail related thereto will be described with reference to FIGS. 12, 13A, and 13B below.

Although one marker 520 is described as an example in FIGS. 5A and 5B, embodiments of the present invention are not limited thereto. For example, the wearable device 101 may transmit information on a plurality of markers to the external electronic device 480. The external electronic device 480 may display the plurality of markers through the display region. The wearable device 101 may display a virtual keyboard based on the plurality of markers.

Referring to FIGS. 5A and 5B, provided are a device, a method, and a non-transitory computer-readable storage medium for displaying a virtual keyboard according to an embodiment of the disclosure and obtaining an input for the virtual keyboard based on an external electronic device. The device, method, and non-transitory computer-readable storage medium according to an embodiment of the disclosure may obtain an input in a virtual space, based on a touch input to an external electronic device (e.g., a smartphone, a tablet, a controller, etc.) that the user is familiar with. Accordingly, the device, method, and non-transitory computer-readable storage medium according to an embodiment of the disclosure may intuitively display a visual object (e.g., the indicator 550) for recognition of a part to which the user desires to input. Further, the device, method, and non-transitory computer-readable storage medium according to an embodiment of the disclosure may use an edge detection method instead of a hand tracking method to reduce the risk of current leakage and increase the accuracy of recognition of touch events.

FIG. 6 illustrates an example of a flowchart of an operation in which a wearable device displays a virtual keyboard based on an external electronic device and obtains an input.

The wearable device of FIG. 6 may include the wearable device 101 of FIG. 4. For example, at least one of the operations of FIG. 6 may be performed by the processor 120 included in the wearable device 101. Each of the operations of FIG. 6 may be performed sequentially, but is not necessarily performed sequentially. For example, the sequence of each of the operations may be changed, and at least two operations thereof may be performed in parallel.

Although not shown in FIG. 6, the wearable device 101 according to an embodiment may be in a state in which a connection with the external electronic device 480 has been established. For example, the wearable device 101 may communicate with the external electronic device 480 through the communication circuit 440. According to an embodiment, the wearable device 101 may obtain information on the external electronic device 480 while establishing a connection with the external electronic device 480. For example, the information on the external electronic device 480 may include information on the size of the display region of the display 483 of the external electronic device 480. The size of the display region may represent a combination of a length in a first direction (e.g., horizontal) and a length in a second direction (e.g., vertical).

In operation 600, the wearable device 101 according to an embodiment may identify an event for displaying a virtual keyboard. For example, the wearable device 101 may identify the event based on the sensor 410 included in the wearable device 101 or a physical button of the wearable device 101. For example, the wearable device 101 may identify that the user of the wearable device 101 performs a motion, gesture, or touch input for the event based on the sensor 410. Further, for example, the wearable device 101 may identify the user's input to the physical button of the wearable device 101. Accordingly, the wearable device 101 may identify the event. For example, the touch input may include a touch input for a virtual object for inputting text in the virtual space. For example, the motion or the gesture may include a designated operation for inputting text in the virtual space.

In operation 605, the wearable device 101 according to an embodiment may identify whether an external input function has been activated. The external input function may represent a function of obtaining an input for the virtual keyboard through the external electronic device 480. For example, the external input function may include displaying an indicator (e.g., the indicator 550 of FIG. 5B) indicating the position of the external object (e.g., the external object 530 of GIG. 5B) projected on the virtual keyboard, in response to a hovering input of the external object to the external electronic device 480. For example, the external input function may include executing an input function based on the virtual keyboard, based on an input (or a touch event) including a contact point with the external electronic device 480. In operation 605, the wearable device 101 may perform operation 610 when the external input function is deactivated. Alternatively, when the external input function is activated, the wearable device 101 may perform operation 615.

In operation 610, when the external input function is deactivated, the wearable device 101 according to an embodiment may identify an event (hereinafter, an activation event) for activating the external input function. For example, the activation event may include a signal transmitting to the wearable device 101 in order to inform that the display (e.g., display 483) of the off state of the external electronic device 480 has been changed on state. Further, for example, the activation event may include a user's input for a virtual object for activating the external input function in the virtual space. For example, the input may include a touch input, a motion, or a gesture. For example, the virtual object may be included in a user interface of a software application for setting the wearable device 101. For example, the virtual object may be included in a user interface of a software application for displaying a virtual space provided by the wearable device 101.

In operation 615, the wearable device 101 according to an embodiment may transmit a signal for requesting display of a marker. For example, when the external input function is activated, the wearable device 101 may transmit a signal for requesting display of the marker to the external electronic device 480. For example, the marker may include a visual object for displaying the virtual keyboard and setting a position of the virtual keyboard. Hereinafter, the marker may be referred to as a first marker. For example, the signal for requesting display of the first marker may include information on the first marker. For example, the information on the first marker may include at least one of a list of markers identifiable by the wearable device 101, information on the shape of each of the markers included in the list, and information on an area where the markers in the display region of the external electronic device 480 are to be disposed. For example, the shape of the first marker may represent a pattern making up the marker. Specific detail of various examples of the marker will be described in FIG. 8B.

In operation 620, according to an embodiment, the wearable device 101 may identify the marker through an image acquired using the camera 420. For example, the image may include the first visual object representing the external electronic device 480 and the third visual object representing the marker displayed by the external electronic device 480 through the display region. For example, the wearable device 101 may identify the first marker based on the information about the first marker. For example, the wearable device 101 may identify whether information on the shape of the first marker included in the information matches the third visual object included in the image.

In operation 625, according to an embodiment, the wearable device 101 may display a virtual keyboard based on the marker. According to an embodiment, based on identifying that the information on the first marker matches the third visual object, the wearable device 101 may display the virtual keyboard in the virtual space.

For example, the virtual keyboard may be displayed on a fixed area in the virtual space of the wearable device 101. For example, the fixed area may include a designated area within a screen displaying the virtual space. As such, even if the user's gaze wearing the wearable device 101 moves, the virtual keyboard within the screen displaying the virtual space may always be displayed. A method of displaying the virtual keyboard in the fixed area in the virtual space may be referred to as a space anchored mode, a space anchored state state, or a first state.

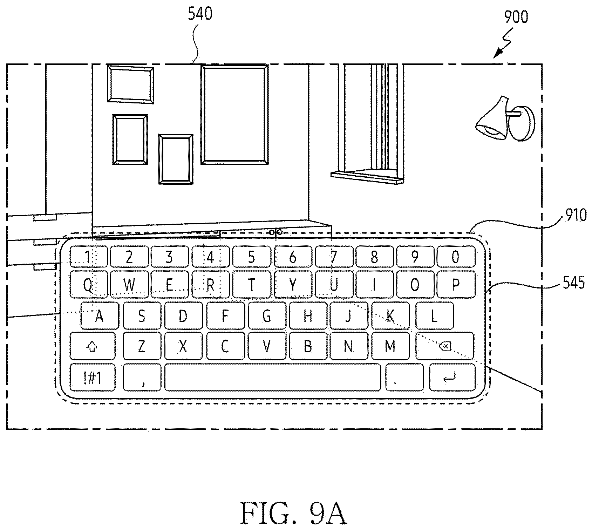

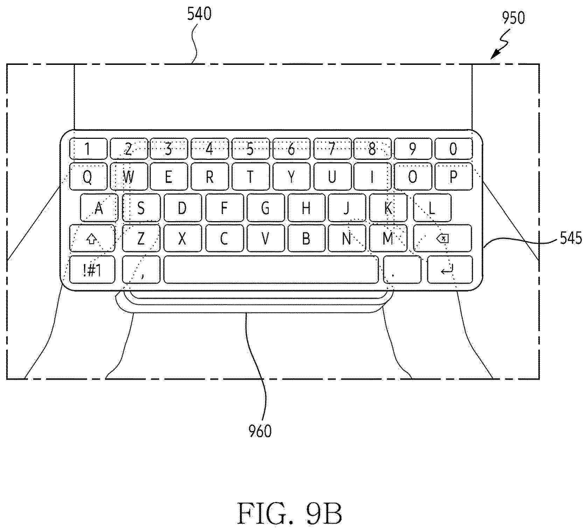

Further, for example, the virtual keyboard may be displayed in an area identified based on position information and rotation information of the first marker. For example, the position of the virtual keyboard may be identified based on a coordinate indicating the position of the first marker, an angle at which the first marker is rotated, and an offset. The coordinate indicating the position of the first marker may represent global positioning information. The offset may represent a coordinate with respect to a reference point of the external electronic device 480, as a reference for adjusting the position of the virtual keyboard. For example, the reference point may include a vertex of an upper left end in the display region of the external electronic device 480. For example, the rotation angle of the virtual keyboard may be identified based on the rotation angle of the marker displayed by the external electronic device 480 compared to the shape of the marker generated and transmitted by the wearable device 101. Accordingly, the virtual keyboard may be displayed in the area identified based on the position of the virtual keyboard and the rotation angle of the virtual keyboard. The area may include an area above a virtual object representing the external electronic device 480. For example, the virtual object may be covered by the virtual keyboard 545. The area may include an area above the position in which the external electronic device 480 actually exists. In other words, according to a movement of the user's gaze of the wearable device 101, the virtual keyboard may or may not be displayed on the screen through the virtual space. The method of displaying the virtual keyboard in the area identified based on the marker may be referred to as an object anchored mode, an object anchored state, or a second state. Specific examples of the space anchored mode and the object anchored mode will be described in FIGS. 9A and 9B below.

According to an embodiment, the wearable device 101 may display the virtual keyboard based on information about the virtual keyboard stored in the memory 130. For example, the information about the virtual keyboard may include a layout for displaying the virtual keyboard. The layout may include information on an arrangement of visual objects representing buttons of the virtual keyboard. For example, the information on the arrangement may include QWERTY, Dvorak, two-set and/or three-set keyboard systems. Alternatively, the information on the arrangement may include an arrangement used in an ergonomic keyboard or a split keyboard. However, the disclosure is not limited thereto.

Although not shown in FIG. 6, according to an embodiment, when the wearable device 101 identifies that the information on the shape of the first marker and the third visual object indicating the first marker are inconsistent with each other, the wearable device 101 may transmit a signal including information on another marker to the external electronic device 480. Hereinafter, the other marker may be referred to as a second marker. The external electronic device 480 that has acquired the information on the second marker may display the second marker. The wearable device 101 may acquire an image including a fourth visual object displaying the second marker through the camera 420, and display the virtual keyboard in the virtual space, in response to identifying that the information on the fourth visual object matches the information on the second marker. Specific details related to the operation of the wearable device 101 generating the marker and identifying and updating the displayed marker will be described in FIG. 7 below.

In operation 630, according to an embodiment, the wearable device 101 may identify an external object in a state in which the virtual keyboard is displayed. For example, the wearable device 101 may identify the external object by using an image acquired through the camera 420 in a state in which the virtual keyboard is displayed (e.g., the first state or the second state). The external object may include an object different from the external electronic device 480. For example, the external object may include a component capable of performing an input to an external electronic device 480, such as a finger or a pen. The image may include the second visual object representing the external object and the first visual object representing the external electronic device 480. The wearable device 101 may identify the external object by identifying an edge of the second visual object, using the image. A method of identifying the edge based on information indicating a difference in brightness of each of pixels in the image may be referred to in an edge detection method. According to an embodiment, when the edge detection method is used, the wearable device 101 may deactivate the hand tracking method. For example, the wearable device 101 may deactivate the hand tracking method in response to displaying the virtual keyboard in the operation 625. For example, the wearable device 101 may stop the hand tracking in response to displaying the virtual keyboard. In other words, the hand tracking method may be maintained in an activated state until the virtual keyboard is displayed. Specific details of the edge detection method will be described with reference to FIGS. 10 and 11 below.

In operation 635, according to an embodiment, the wearable device 101 may display an indicator representing the position of the external object. For example, the wearable device 101 may display the indicator representing the position of the external object projected onto the virtual keyboard, based on the edge identified using the image. The external object may be located in an area (e.g., a detection area) adjacent to the display region of the external electronic device 480. For example, the indicator may be displayed to be superimposed on the virtual keyboard within the virtual space.

According to an embodiment, the wearable device 101 may display a movement of the external object with respect to the external electronic device 480 through the indicator. For example, when a hovering input by the external object is caused with respect to the display region of the external electronic device 480, the wearable device 101 may display the indicator corresponding to the hovering input on the virtual keyboard. For example, the hovering input may indicate that the external object 530 is located within the detection area associated with the display region. For example, when the position of the hovering input by the external object is changed (or moved), the position at which the indicator is displayed in the virtual space may be changed.

In operation 640, according to an embodiment, the wearable device 101 may identify whether a signal for a touch event has been received. For example, the wearable device 101 may identify whether a signal for notifying that the touch event has occurred on the display region of the external electronic device 480 has been received from the external electronic device 480. In operation 640, the wearable device 101 may perform operation 645 when identifying that the signal has been received. In operation 640, the wearable device 101 may perform operation 635 when identifying that the signal is not received. For example, the wearable device 101 may maintain displaying of the indicator until the signal is received.

In operation 645, according to an embodiment, the wearable device 101 may execute an input function based on the virtual keyboard, based on receiving a signal for a touch event of the external object with respect to the external electronic device 480. For example, the wearable device 101 may receive a signal for a touch event for the external electronic device 480 of the external object. For example, the touch event may include an input in which the external object includes a contact point for the display region of the display 483 of the external electronic device 480. The external electronic device 480 may transmit the signal for the touch event to the wearable device 101, in response to identifying the input including the contact point. The wearable device 101 may identify the signal as an input for a virtual button in the virtual keyboard corresponding to the position of the indicator, based on receiving the signal. The virtual button may be included in a plurality of virtual buttons included in the virtual keyboard. According to an embodiment, the wearable device 101 may identify that the touch event is an input intended by a user, based on an error between information on the touch event (e.g., the position of the contact point) and the position of the indicator, and a reference range. According to an embodiment, when identifying that the touch event is an input intended by the user 510, the wearable device 101 may execute the input function corresponding to the input to the virtual button. According to an embodiment, the wearable device 101 may execute the input function corresponding to the input to the virtual button. For example, the input function may include an output of a specific value and execution of a specific operation (e.g., delete, move, change). Specific details related to the operation of obtaining an input will be described with reference to FIGS. 12, 13A, and 13B below.

FIG. 7 illustrates an example of a flowchart of an operation of an wearable device identifying a marker.

The wearable device of FIG. 7 may include the wearable device 101 of FIG. 4. For example, at least one of the operations of FIG. 7 may be performed by the processor 120 included in the wearable device 101. Each of the operations of FIG. 7 may be performed sequentially, but is not necessarily performed sequentially. For example, the order of each of the operations may be changed, and at least two operations thereof may be performed in parallel. The operations of FIG. 7 may include specific examples of operations 615 to 625 of FIG. 6. However, the embodiments of the disclosure are not limited thereto. For example, the wearable device 101 may generate a marker and information on the marker, even before identifying that the external input function is activated in the operation 605.

In operation 700, according to an embodiment, the wearable device 101 may generate a marker. For example, the wearable device 101 may generate at least one marker for displaying the virtual keyboard. For example, the at least one marker may include a visual object for displaying the virtual keyboard and setting a position of the virtual keyboard. For example, the at least one marker may include a keyboard shape, a checkerboard shape, a shape including circular-grids, an ARToolkit marker, an ARTag marker, and an APrilgrid marker. Specific examples related thereto will be described in FIG. 8B below.

In operation 705, according to an embodiment, the wearable device 101 may transmit information on the marker. For example, the wearable device 101 may transmit the generated information on the at least one marker to the external electronic device 480. For example, the information may include at least one of a list of markers identifiable by the wearable device 101, information on a shape of each of the markers included in the list, and information on an area in which the markers are to be disposed in the display region of the external electronic device 480. The list of the identifiable markers may include the at least one marker generated by the wearable device 101. For example, the shape of the marker may represent a pattern constituting the marker. For example, the area in which the markers are to be disposed may be identified based on information on the display region of the external electronic device 480 received while the wearable device 101 establishes a connection with the external electronic device 480. For example, the information on the area to be disposed may include one of areas designated for the wearable device 101. The designated areas may include an area having a high probability of not being covered by the external object among the display regions. For example, the area having a high probability of not being covered may include a middle point of the display region. The designated areas may be referred to as default areas.

In operation 710, according to an embodiment, the wearable device 101 may identify whether it may detect the marker. For example, the wearable device 101 may identify the marker through an image acquired using the camera 420. For example, the image may include the first visual object representing the external electronic device 480 and the third visual object representing the marker displayed by the external electronic device 480 through the display region. For example, the wearable device 101 may identify the marker based on the information on the marker. For example, the wearable device 101 may identify whether the shape of the marker included in the information matches the second visual object representing the marker included in the image. In the above example, one marker is described as an example, but the embodiment of the disclosure is not limited thereto. The external electronic device 480 may display at least one marker through the display region. The wearable device 101 may identify the at least one marker based on at least one second visual object representing the at least one marker and information on the marker.

In operation 710, when the wearable device 101 detects the marker, it may perform operation 720. When the wearable device 101 does not detect the marker, operation 715 may be performed.

In operation 715, according to an embodiment, the wearable device 101 may update information on the marker. For example, the wearable device 101 may update information on the marker in response to not detecting the marker included in the image. In other words, the wearable device 101 may update at least one of a previously generated list of markers, the shape of the marker, and information on an area in which the marker is to be disposed. For example, the information on the area to be disposed may include one of areas designated by the wearable device 101. The designated areas may include an area having a high probability of not being covered by an external object among the display region. For example, the area having a high probability of not being covered may include a middle point of the display region. The designated areas may be referred to as default areas.

In operation 720, according to an embodiment, the wearable device 101 may detect a display region and display a virtual keyboard. For example, the wearable device 101 may detect the display region in the visual object corresponding to the external electronic device 480 of the image. For example, the wearable device 101 may detect a visual object indicating the display region. Based on information on the marker and the detected marker in the image, the wearable device 101 may identify a rotation state of the display region and a distance from the wearable device 101 to the display region, based on the visual object indicating the display region. For example, the wearable device 101 may display the virtual keyboard in the virtual space, based on detecting the marker.

According to an embodiment, the wearable device 101 may identify an unidentified marker in the display region. For example, the wearable device 101 may identify a marker in an area overlapping an external object among markers displayed in the display region. For example, the wearable device 101 may identify second visual objects representing markers in the visual object indicating the display region. At least some of the second visual objects representing the markers may be covered by a second visual object representing the external object. The wearable device 101 may identify the at least part of the marker covered by the second visual object. The at least part of the marker may indicate a marker positioned in an area overlapping the external object. According to an embodiment, the wearable device 101 may identify areas different from the areas in which the external object is located in the display region, based on the position of the marker in the overlapping area.

In operation 725, according to an embodiment, the wearable device 101 may update information on the marker based on the information on the display region. For example, the wearable device 101 may update at least one of a previously generated list of markers, a shape of the marker, and information on an area in which the marker is to be disposed, based on information on the other areas in which the external object is not located in the display region. For example, the information on the area to be placed may include the other areas of the wearable device 101.

According to an embodiment, the wearable device 101 may also update the size of the marker. For example, when the external electronic device 480 moves away from the wearable device 101, it may be difficult to identify a marker having a small size. In contrast, when the external electronic device 480 gets closer to the wearable device 101, the presence of many small markers may make it easier to accurately identify the position of the virtual keyboard. Accordingly, the wearable device 101 may update the size of the marker based on the distance to the display region and the other areas.

Based on the updated information on the marker based on operation 715 or operation 725, the wearable device 101 may generate a marker and transmit the information on the marker to the external electronic device 480. Accordingly, the wearable device 101 may identify the marker displayed at a more easily identifiable position.

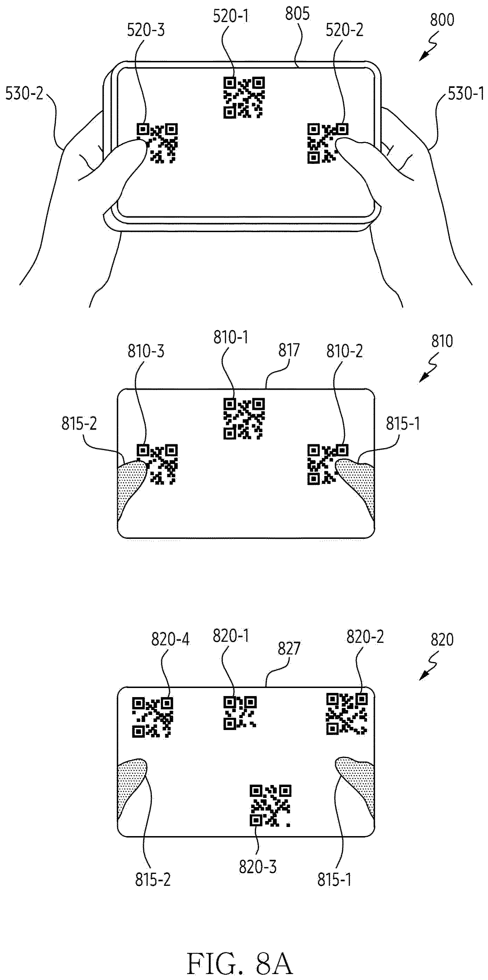

FIG. 8A illustrates an example of an operation of a wearable device identifying an area in which a marker is to be disposed in a display region of an external electronic device. The wearable device 101 of FIG. 8A may include the wearable device 101 of FIG. 4. The external electronic device 480 of FIG. 8A may include the external electronic device 480 of FIG. 4.

Referring to FIG. 8A, an example 800 illustrates an example of an operation in which the external electronic device 480 displays a marker, based on information on the marker obtained from the wearable device 101. An example 810 illustrates the example 800 of an image obtained by the wearable device 101 through the camera 420.

Referring to the example 800, the wearable device 101 may transmit the information for displaying the three markers 520-1, 520-2, and 520-3 to the external electronic device 480. For example, the information may include three markers 520-1, 520-2, and 520-3 to be displayed through the display region of the display 483 of the external electronic device 480, a size of each of the markers, a shape of each of the markers, and an area to be disposed of each of the markers. The area to be disposed may include the designated area. Referring to the example 800, the external electronic device 480 may display the three markers 520-1, 520-2, and 520-3 through the display region 805. For example, the external electronic device 480 may display the marker 520-3 in a lower left area of the display region, the marker 520-2 in a lower right area of the display region, and the marker 520-1 in a central area of the display region. Further, referring to the example 800, external objects 530-1 and 530-2 may be located with respect to the external electronic device 480. For example, when the user grips the external electronic device 480, the external objects 530-1 and 530-2 may be located in the lower left area and the lower right area of the external electronic device 480, respectively.

Referring to the example 810, the wearable device 101 may acquire an image including a first visual object 817 indicating the display region 805 of the external electronic device 480 through the camera 420, third visual objects 810-1, 810-2, and 810-3 indicating markers 520-1, 810-2, and 530-2, and second visual objects 815-1 and 815-2 indicating external objects 530-1 and 530-2. According to an embodiment, the wearable device 101 may detect a first visual object 817 indicating the display region 805 based on the image. According to an embodiment, the wearable device 101 may identify that the third visual object 810-1 indicating the marker 520-1 in the first visual object 817 matches information on the marker transmitted to the external electronic device 480, and display a virtual keyboard. According to an embodiment, the wearable device 101 is located in an area overlapping the external objects 530-1 and 530-2 in the first visual object 817 indicating the display region 805, and may identify the covered markers 520-2 and 520-3. For example, based on the image, the wearable device 101 may identify that the third visual object 810-2 representing the marker 520-2 overlaps the second visual object 815-1 representing the external object 530-1. Based on the image, the wearable device 101 may identify that the third visual object 810-3 representing the marker 520-3 overlaps the second visual object 815-2 representing the external object 530-2. Accordingly, the wearable device 101 may identify that the marker 520-2 and the marker 520-3 are covered by the external objects 530-1 and 530-2, and may identify areas of the marker 520-2 and the marker 520-3 within the display region 805.

An example 820 illustrates an example of an image including rearranged markers, based on the wearable device 101 identifying an area covered by external objects. According to an embodiment, the wearable device 101 may update information on the marker, based on an area of the marker 520-2 and the marker 520-3 covered by the external objects 530-1 and 530-2. For example, the wearable device 101 may change the number of markers from three to four. For example, the wearable device 101 may change the size and shape of each of the markers. For example, the wearable device 101 may change an area in which the markers are disposed. For example, the area in which the markers are disposed may be an area different from the area of the marker 520-2 and the marker 520-3. The wearable device 101 may generate markers based on the updated information and transmit the information on the updated marker to the external electronic device 480. The external electronic device 480 may display the markers based on the updated marker information. According to an embodiment, the wearable device 101 may acquire an image for the display region 805 including the displayed markers. For example, the image may include third visual objects 820-1, 820-2, 820-3, and 820-4 representing the markers, and second visual objects 815-1 and 815-2 representing the external objects 530-1 and 530-2. The wearable device 101 may identify the third visual objects 820-1, 820-2, 820-3, and 815-4 and the second visual objects 815-1 and 815-2 within the first visual object 827 representing the display region 805. For example, the wearable device 101 may identify the third visual objects 820-1, 820-2, 820-3, and 820-4. Based on the markers identified using the third visual objects 820-1, 820-2, 820-3, and 820-4, the wearable device 101 may display a virtual keyboard (not shown) displayed in a virtual space. For example, the wearable device 101 may identify the second visual objects 815-1 and 815-2. The wearable device 101 may display indicators (not shown) indicating the external objects 530-1 and 530-2 in a state superimposed on the virtual keyboard.

FIG. 8B illustrates an example of a marker for a virtual keyboard. The virtual keyboard may represent a virtual object displayed by the wearable device 101 through a virtual space. The marker may include a visual object for displaying the virtual keyboard and setting the position of the virtual keyboard.

Referring to FIG. 8B, examples 830, 840, 850, 860, 870, and 880 of markers of various shapes are illustrated. Referring to an example 830, the marker may include a visual object representing a keyboard. For example, the marker may be formed in the shape of a keyboard provided by a software application displaying the keyboard of the external electronic device 480. Referring to the example 840, the marker may include a calibration marker in a checkerboard format. Alternatively, referring to the example 850, the marker may include a marker having a shape including a plurality of circle-grids. Alternatively, referring to the example 860, the marker may include ARToolkit markers. Alternatively, referring to the example 870, the marker may include ARTag markers. Although the example 860 and the example 870 show that a plurality of markers are displayed at a time through the display region of the electronic device (e.g., the external electronic device 480), it is merely an example for explaining various shapes of the marker, and embodiments of the disclosure are not limited thereto. Alternatively, referring to the example 880, the marker may include an Aprilgrid marker. However, embodiments of the disclosure are not limited thereto. Embodiments of the disclosure may include markers having various shapes.

FIGS. 9A and 9B illustrate an example of a method of displaying a virtual keyboard in a virtual space. The virtual keyboard 545 may represent a virtual object displayed by the wearable device 101 through a virtual space.

FIGS. 9A and 9B illustrate an example 900 of a virtual keyboard 545 displayed through a space anchored mode (or space anchored state) (hereinafter, a first state) and an example 950 of a virtual keyboard 545 displayed through an object anchored mode (or object anchored state) (hereinafter, a second state).

According to an embodiment, the wearable device 101 may display the virtual keyboard 545 on the screen 540 displaying the virtual space based on the marker, using the image acquired through the camera 420. According to an embodiment, the wearable device 101 may identify a state of displaying the virtual keyboard 545. For example, the wearable device 101 may identify one of the first state and the second state as a state of displaying the virtual keyboard 545.

Referring to the example 900, a virtual keyboard 545 may be displayed on a fixed area in the virtual space of wearable device 101. For example, the fixed area may include a designated area 910 in the screen 540 that displays the virtual space. The designated area 910 may be preset through a software application displaying the virtual space or a software application for setting of the wearable device 101. For example, the designated area 910 may include an intermediate area in the virtual space. The virtual keyboard 545 is displayed through the area 910, which is a fixed area in the virtual space, and the virtual keyboard 545 may always be displayed in the screen 540 displaying the virtual space even though the user's gaze wearing the wearable device 101 moves.

Referring to the example 950, the virtual keyboard 545 may be displayed in an area identified based on position information and rotation information of the marker. For example, the position of virtual keyboard 545 may be identified based on a coordinate indicating the position of the marker, an angle at which the marker is rotated, and an offset. A coordinate indicating the position of the marker may represent global positioning information. The offset may represent a coordinate with respect to a reference point of the external electronic device 480, as a reference for adjusting the position of the virtual keyboard 545. For example, the reference point may include a vertex of an upper left end in the display region of the external electronic device 480. For example, the rotation angle of the virtual keyboard 545 may be identified based on the rotated angle of the marker displayed by the external electronic device 480, compared to the shape of the marker generated and transmitted by the wearable device 101. Accordingly, the virtual keyboard 545 may be displayed in the area identified based on the position of the virtual keyboard 545 and the rotation angle of the virtual keyboard 545. The area may include an area above the virtual object 960 representing the external electronic device 480. FIG. 9B shows the virtual object 960 as viewed together with the virtual keyboard 545, but it is only for convenience of explanation and the disclosure is not limited thereto. For example, the virtual object 960 may be covered by the virtual keyboard 545. In other words, depending on the movement of the user's gaze of the wearable device 101, the virtual keyboard 545 may or may not be displayed in the screen 540 displayed through the virtual space.

Although not shown in FIGS. 9A and 9B, according to an embodiment, the size of the virtual keyboard 545 may be changed based on at least a part of a user input. For example, the wearable device 101 may change the size of the virtual keyboard 545 displayed through the display 430, based on at least a part of the user input to the virtual keyboard 545 displayed in the virtual space.

FIG. 10 illustrates an example of a flowchart illustrating an operation of a wearable device identifying an external object.

The wearable device of FIG. 10 may include the wearable device 101 of FIG. 4. For example, at least one of the operations of FIG. 10 may be performed by the processor 120 included in the wearable device 101. Each of the operations of FIG. 10 may be performed sequentially, but is not necessarily performed sequentially. For example, the order of each of the operations may be changed, and at least two operations thereof may be performed in parallel. The operations of FIG. 10 may include specific operations for the operations 630 to 635 of FIG. 6.

In operation 1000, according to an embodiment, the wearable device 101 may identify a detection area based on an image acquired through the camera 420. For example, the image may include a first visual object representing an external electronic device 480 and a third visual object representing a marker. For example, the wearable device 101 may identify the first visual object based on the third visual object. For example, the wearable device 101 may identify the detection area extending from a display region portion of the external electronic device 480 in the first visual object. The detection area may indicate an area extending from the display region portion of the external electronic device 480 and including a virtual space. In order for the wearable device 101 to increase the recognition accuracy and reduce the power consumption in the processing process, the detection area may be limited to the virtual space extending from the display region portion. For example, the detection area may include an area in which the external electronic device 480 may detect a hovering input by an external object.

In operation 1005, the wearable device 101 may identify an edge of the second visual object representing the external object, based on information indicating the difference in brightness. For example, the wearable device 101 may identify brightness information of each of a plurality of pixels included in the image acquired through the camera 420. For example, the image may include the second visual object. According to an embodiment, the wearable device 101 may identify the edge of the second visual object, based on the brightness information of each of the plurality of pixels and a reference brightness. For example, the wearable device 101 may identify the edge in which the brightness difference between adjacent pixels among the plurality of pixels is equal to or greater than the reference brightness. The edge may be a set of pixels in which the brightness difference is greater than or equal to the reference brightness.

According to an embodiment, the edge may be identified based on the brightness difference and a reference value for identifying the second visual object. For example, the reference value may be identified based on at least one of a sharpness, a size, or a length of the second visual object. For example, the wearable device 101 may adjust the reference value so as not to identify a thin external object such as hair.

In operation 1010, according to an embodiment, the wearable device 101 may identify the position of the external object, based on position information on the edge. For example, the position information may include coordinate information for the middle point of the edge. For example, the coordinate information may represent a coordinate on the display region of the external electronic device 480 from a reference point. For example, the reference point may include a vertex at an upper left end in the display region of the external electronic device 480. For example, the wearable device 101 may identify the position of the external object indicated by the second visual object including the edge, based on the coordinate information.

Although not shown in FIG. 10, according to an embodiment, the wearable device 101 may display an indicator representing the identified position of the external object. For example, the wearable device 101 may display the indicator representing the position of the external object projected onto the virtual keyboard, based on the edge identified using the image. For example, the indicator may be displayed in a state superimposed on the virtual keyboard in the virtual space.

According to an embodiment, the wearable device 101 may display a movement of the external object with respect to the external electronic device 480 through the indicator. For example, when a hovering input by the external object occurs in the display region of the external electronic device 480, the wearable device 101 may display the indicator corresponding to the hovering input on the virtual keyboard. Accordingly, when the position of the hovering input is changed (or moved) by the external object, the position at which the indicator is displayed in the virtual space may be changed.

FIG. 11 illustrates an example of an operation of a wearable device identifying an external object. The wearable device 101 of FIG. 11 may include the wearable device 101 of FIG. 4.

FIG. 11 illustrates an example 1100 of an image including a first visual object representing the external electronic device 480 displaying a keyboard-shaped marker, an example 1110 of identifying a detection area 1115 in the image, an example 1120 of identifying an edge 1125 in the detection area 1115, and an example 1130 of identifying a position of an external object based on the edge 1125. The external electronic device 480 may include the external electronic device 480 of FIG. 4.

Referring to the example 1100, the image acquired by the wearable device 101 through the camera 420 may include a first visual object 1105 representing the external electronic device 480 and a third visual object 1107 representing the marker. For example, the third visual object 1107 may be formed in a keyboard shape. This is only an example for convenience of explanation, and the embodiment of the disclosure is not limited thereto. For example, the marker may include various examples of FIG. 8B.

Referring to the example 1110, the wearable device 101 may identify the detection area 1115 based on the image. For example, the detection area 1115 may include an area extending from a display region portion of the first visual object 1105 and including a virtual space. For example, the virtual space included in the detection area 1115 may be identified based on the processing power and the power consumption of the wearable device 101.

Referring to the example 1120, the wearable device 101 may identify the edge 1125 of a visual object (not shown) representing an external object (e.g., a finger) in the detection area 1115. For example, the edge 1125 may be a visual object representing a finger, which is an external object projected onto the detection area 1115. For example, the wearable device 101 may identify brightness information of a plurality of pixels in the image. The wearable device 101 may identify the edge 1125 in which a brightness difference between a plurality of adjacent pixels among the plurality of pixels is equal to or greater than a reference brightness. The edge 1125 may be a set of pixels in which the brightness difference is greater than or equal to the reference brightness. According to an embodiment, the wearable device 101 may be identified based on the difference in brightness and a reference value for identifying the visual object indicating the external object. For example, the reference value may be identified based on at least one of a sharpness, a size, and a length of the visual object. For example, the wearable device 101 may adjust the reference value so as not to identify a thin external object such as hair.

Referring to the example 1130, the wearable device 101 may identify the position of the external object based on position information on the edge 1125. For example, the position information may include coordinate information on the middle point of the edge. For example, the coordinate information may include an x-axis coordinate 1131 and a y-axis coordinate 1132 on the first visual object 1105. For example, the x-axis coordinates 1131 and the y-axis coordinates 1132 may be defined based on coordinates with respect to a reference point of the external electronic device 480 (or the first visual object 1105 representing the external electronic device 480). For example, the reference point may include a vertex at the upper left end in the display region of the external electronic device 480. For example, the wearable device 101 may identify the position of the external object based on the coordinate information.

FIG. 12 illustrates an example of a flowchart illustrating an operation in which a wearable device executes an input function based on a signal for a touch event.

The wearable device of FIG. 12 may include the wearable device 101 of FIG. 4. For example, at least one of the operations of FIG. 12 may be performed by the processor 120 included in the wearable device 101. Each of the operations of FIG. 12 may be performed sequentially, but is not necessarily performed sequentially. For example, the order of each of the operations may be changed, and at least two operations thereof may be performed in parallel. The operations of FIG. 12 may include specific examples of operations 640 to 645 of FIG. 6.

In operation 1200, the wearable device 101 according to an embodiment may receive position information of a touch event. For example, the wearable device 101 may receive a signal for the touch event. For example, the signal may include position information on the touch event. The position information on the touch event may include coordinate information indicating a position of a contact point on the display region of the external electronic device 480. For example, the coordinate information may include x-axis coordinates and y-axis coordinates on the basis of one point of the display region. For example, the signal may include a type of the touch event. For example, the type may include touch up, touch down, scroll, swipe, drag, and the like.

In operation 1205, according to an embodiment, the wearable device 101 may identify whether an error between the position of the indicator and the position of the touch event is within a reference range. For example, the wearable device 101 may identify a relative coordinate indicating the position of the indicator and a relative coordinate indicating the position of the touch event. For example, the wearable device 101 may identify a ratio of the position information (e.g., x-axis size: 1100 pixels, y-axis size: 300 pixels) on the touch event to information on the size of the display 483 (e.g., x-axis size: 1500 pixels, y-axis size: 600 pixels), as a relative coordinate indicating the position of the touch event. The information on the size of the display 483 may be obtained while establishing a connection with an external electronic device 480. For example, the wearable device 101 may identify a ratio of the edge position information (e.g., x-axis size: 1340 pixels, y-axis size: 430 pixels) to information on the size of the virtual keyboard (e.g., x-axis size: 1800 pixels, y-axis size: 900 pixels), as a relative coordinate indicating the position of the indicator. In other words, the wearable device 101 may identify the relative coordinates of the indicator as (0.744, 0.477) and the relative coordinates of the touch event as (0.733, 0.5).

According to an embodiment, the wearable device 101 may identify whether an error between the relative coordinates of the indicator and the relative coordinates of the touch event is within the reference range. For example, the wearable device 101 may identify whether the error is less than or equal to the reference range. The expression 'within the reference range' may refer to being less than or equal to the reference range. For example, the reference range may be expressed as a range for a value of the relative coordinates. For example, the range for the value of the relative coordinates may be 0 to 0.05. Examples of the reference range are only of examples, and the embodiments of the disclosure are not limited thereto. The reference range may be represented as a range for a distance between relative coordinates. According to an embodiment, the reference range may be adjusted with a software application displaying a virtual keyboard or a software application for setting of the wearable device 101.

In operation 1205, when the error is within (or less than or equal to) the reference range, the wearable device 101 may perform operation 1215. When the error exceeds the reference range, the wearable device 101 may perform operation 1210.

In operation 1210, the wearable device 101 may ignore the touch event related to the received signal. For example, as the wearable device 101 identifies that the error exceeds the reference range, the wearable device 101 may identify that the input is not an input intended by the user. The wearable device 101 may ignore the touch event. Then, referring again to FIG. 6, the wearable device 101 may display an indicator representing the position of the external object based on operation 635. For example, the wearable device 101 may ignore the touch event and maintain displaying of the indicator.

In operation 1215, the wearable device 101 may execute an input function. As the wearable device 101 identifies that the error is less than or equal to the reference range, the wearable device 101 may identify that the touch event is an input intended by the user. Accordingly, the wearable device 101 may execute the input function corresponding to the input to the virtual button. For example, the input function may include outputting of a specific value and executing of a specific operation (e.g., delete, move, or change). The specific value or the specific operation may be identified based on a virtual button in the virtual keyboard corresponding to the position of the indicator. The virtual button may be included in a plurality of virtual buttons included in the virtual keyboard.

FIGS. 13A and 13B illustrate an example of an operation of the wearable device obtaining an input for a virtual keyboard. The wearable device 101 of FIGS. 13A and 13B may include the wearable device 101 of FIG. 4. The external electronic device 480 of FIGS. 13A and 13B may include the external electronic device 480 of FIG. 4.

FIG. 13A illustrates an example 1300 of acquiring the input for a virtual keyboard 1315 that changes a movement of the indicator 1320 in the virtual keyboard 1315, based on a hovering input to the external electronic device 480. Further, FIG. 13B illustrates an example 1305 of acquiring the input for a virtual keyboard 1315 that selects a position of the indicator 1320, based on an input including a contact point for the external electronic device 480.

Referring to the example 1300, the user 510 may cause a hovering input to the display region of the external electronic device 480 through an external object 1330. For example, the user 510 may perform a hovering input to the external electronic device 480, via the external object 1330 in a state spaced apart from a first position 1330a of the display region. In response to the hovering input to a first position 1330a, the wearable device 101 may display a virtual keyboard 1315 through a screen 1310. The screen 1310 may include an indicator 1320 displayed in an overlapping state within the virtual keyboard 1315 at a first virtual position 1320a corresponding to the first position 1330a. Then, the user 510 may move (1335) the position of the external object 1330 from the first position 1330a to the second position 1330b. In response to the movement 1335, the wearable device 101 may display the indicator 1320 on the screen 1310 that moves (1325) from the first virtual position 1320a to the second virtual position 1320b.

Referring to the example 1305, the user 510 may cause an input (or a touch event) 1340 including a contact point for the second position 1330b among the display region of the external electronic device 480 through the external object 1330. The wearable device 101 may identify the input 1340 for the second position 1330b as an input for text (e.g., 'N') corresponding to the second virtual position 1320b in the virtual keyboard 1315. In such a case, the wearable device 101 may identify whether the input is intended by the user 510, by comparing the error between the second position 1330b and the second virtual position 1320b with the reference range. As the wearable device 101 identifies that the error is less than or equal to the reference range, it may display the visual object 1355 representing the text on the visual object 1350 for displaying the text input state. For example, the visual object 1355 may be displayed in an overlapping state on the visual object 1350. For example, a software application for displaying the virtual keyboard 1315 of the wearable device 101 may identify a value indicating 'N' and transmit the value to a software application displaying the visual object 1355 of the wearable device 101. Accordingly, the wearable device 101 may display the visual object 1355 representing 'N' through the software application displaying the visual object 1355. In FIGS. 13A and 13B, an input function for inputting text (i.e., outputting a specific value) is shown as an example, for convenience of explanation, but the embodiments of the disclosure are not limited thereto.

As described above, a wearable device 101 may include communication circuitry 440. The wearable device 101 may include a camera 420. The wearable device 101 may include a display 430. The wearable device 101 may include a processor 120. The processor 120 may be configured to transmit, to an external electronic device 480 connected via the communication circuitry 440, information on a marker displayed via the external electronic device 480. The processor 120 may be configured to display a virtual keyboard via the display 430 based on the marker identified using the information. The processor 120 may be configured to, in a state of displaying the virtual keyboard, detect an edge of a visual object representing an external object, by using information representing a brightness difference of each of pixels included in an image of the camera 420. The processor 120 may be configured to, based on identifying the external object adjacent to a display region of the external electronic device 480, display an indicator representing a position of the external object projected onto the virtual keyboard. The processor 120 may be configured to, based on receiving a signal for a touch event related to the display region from the external electronic device 480 via the communication circuitry 440, execute an input function based on the virtual keyboard.

According to an embodiment, the processor 120 may be configured to, in response to displaying the virtual keyboard, suspend a hand tracking for tracking a shape of a hand including a plurality of fingers via the camera 420.

According to an embodiment, the processor 120 may be configured to, based on the marker included in the image, identify a detection region, extending from the display region, including a virtual space in the image. The processor may be configured to identify the edge in the detection region, using the information representing the brightness difference.

According to an embodiment, the processor 120 may be configured to identify the position of the external object, based on position information of the edge for a reference point of the display region included in the image. The reference point may include a vertex of the display region.

According to an embodiment, the edge may be identified based on the information representing the brightness difference and a reference value for identifying the external object. The reference value may be identified based on at least one of a sharpness, a size, or a length of the visual object representing the external object.

According to an embodiment, the processor 120 may be configured to identify an event for displaying the virtual keyboard in a virtual space displayed via the wearable device 101. The processor 120 may be configured to, in response to the event, transmit, to the external electronic device 480, a signal for requesting to display of the marker.

According to an embodiment, the processor 120 may be configured to, in response to identifying the event, identify whether a function of the external electronic device 480 executing the input function in response to the touch event is activated. The processor 120 may be configured to, in case that the function is activated, transmit, to the external electronic device 480, the signal for requesting displaying of the marker.

According to an embodiment, the processor 120 may be configured to, in case that the state is a first state, display the virtual keyboard on a fixed region of a virtual space. The processor 120 may be configured to, in case that the stat is a second state different from the first state, display the virtual keyboard on a region identified based on position information and rotation information of the marker.

According to an embodiment, the processor 120 may be configured to, based on at least a portion of a user input, change a size of the virtual keyboard.

According to an embodiment, the processor 120 may be configured to, based on identifying that a difference between a position of the touch event and a position of the indicator is less than or equal to a reference range, execute the input function.

As described above, a method performed by a wearable device 101 may include transmitting, to an external electronic device 480 connected via the communication circuitry 440 of the wearable device 101, information on a marker displayed via the external electronic device 480. The method may include displaying a virtual keyboard via the display 430 of the wearable device 101 based on the marker identified using the information. The method may include, in a state of displaying the virtual keyboard, detecting an edge of a visual object representing an external object, using information representing a brightness difference of each of pixels included in an image of the camera 420. The method may include, based on identifying the external object adjacent to a display region of the external electronic device 480, displaying an indicator representing a position of the external object projected onto the virtual keyboard. The method may include, based on receiving a signal for a touch event related to the display region from the external electronic device via the communication circuitry of the wearable device 101, executing an input function based on the virtual keyboard.

As described above, a wearable device 101 may include communication circuitry 440. The wearable device 101 may include a camera 420. The wearable device 101 may include a display 430. The wearable device 101 may include a processor 120. The processor 120 may be configured to obtain, from an external electronic device 480 connected via the communication circuitry 440, information on a marker displayed via the external electronic device 480. The processor 120 may be configured to display a virtual keyboard via the display 430 based on the marker identified using the information. The processor 120 may be configured to, in a state of displaying the virtual keyboard, identify an external object different from the external electronic device 480, using an image of the camera 420. The processor 120 may be configured to, based on identifying the external object adjacent to a display region of the external electronic device 480, display an indicator representing a position of the external object projected onto the virtual keyboard. The processor 120 may be configured to, based on receiving a signal for a touch event related to the display region from the external electronic device via the communication circuitry 440, execute an input function based on the virtual keyboard.

According to an embodiment, the processor 120 may be configured to, in response to displaying of the virtual keyboard, deactivate a hand tracking for tracking a shape of a hand including fingers via the camera 420. The processor 120 may be configured to, based on information representing a brightness difference of each of pixels included in the image, identify the external object.

According to an embodiment, the processor 120 may be configured to, based on the image, identify a detection region extending from the display region. The processor 120 may be configured to identify an edge of a visual object representing the external object in the detection region, by using the information representing the brightness difference.

According to an embodiment, the processor 120 may be configured to identify the position of the external object, based on position information of the edge for a reference point of the display region included in the image. The reference point may include a vertex of the display region.

According to an embodiment, the edge may include a region in which the brightness difference between neighboring pixels among the pixels is greater than or equal to a reference brightness.

According to an embodiment, the processor 120 may be configured to, in response to an event for displaying the virtual keyboard in a virtual space displayed via the wearable device 101, transmit, to the external electronic device 480, a signal for requesting displaying of the marker. The event for displaying the virtual keyboard may include a motion and a gesture of a user wearing the wearable device 101.

According to an embodiment, the processor 120 may be configured to, in response to identifying the event, identify whether a function of the external electronic device 480 executing the input function in response to the touch event is activated. The processor 120 may be configured to, in case that the function is activated, transmit, to the external electronic device 480, the signal for requesting displaying of the marker.

According to an embodiment, the processor 120 may be configured to, in case that the state is a first state, display the virtual keyboard on a fixed region of a virtual space, and the fixed region may include an intermediate region of the virtual space displaying the virtual keyboard. The processor 120 may be configured to, in case that the state is a second state different from the first state, display the virtual keyboard on a region identified based on position information and rotation information of the marker, and the identified region may correspond to the external electronic device 480.

According to an embodiment, the processor 120 may be configured to, based on at least a portion of a user input, change a size of the virtual keyboard.

According to an embodiment, the information on the marker may include information indicating a shape of the marker.

As described above, a method performed by a wearable device 101 may include obtaining, from an external electronic device 480 connected via the communication circuitry of the wearable device 101, information on a marker displayed via the external electronic device 480. The method may include displaying a virtual keyboard via the display 430 of the wearable device 101 based on the marker identified using the information. The method may include, in a state of displaying the virtual keyboard, identifying an external object different from the external electronic device 480, using an image of the camera 420 of the wearable device 101. The method may include, based on identifying the external object adjacent to a display region of the external electronic device 480, display an indicator representing a position of the external object projected onto the virtual keyboard. The method may include, based on receiving a signal for a touch event related to the display region from the external electronic device 480 via the communication circuitry, executing an input function based on the virtual keyboard.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. The electronic devices according to an embodiment of the disclosure are not limited to those described above.

It should be appreciated that various embodiments and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled to/with", or "connected to/with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, "logic," "logic block,", "unit", "part,", "portion" or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments of the disclosure, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device (101) comprising:
communication circuitry (440);
a camera (420);
a display (430); and
a processor (120),
wherein the processor (120) is configured to:
transmit, to an external electronic device (480) connected via the communication circuitry (440), information on a marker displayed via the external electronic device (480);
display a virtual keyboard via the display (430) based on the marker identified using the information;
in a state displaying the virtual keyboard, detect an edge of a visual object representing an external object, by using information representing a brightness difference of each of pixels included in an image of the camera (420);
based on identifying the external object adjacent to a display region of the external electronic device (480), display an indicator representing a position of the external object projected onto the virtual keyboard; and
based on receiving a signal for a touch event related to the display region from the external electronic device (480) via the communication circuitry (440), execute an input function based on the virtual keyboard.

2. The wearable device (101) of claim 1,
wherein the processor (120) is configured to:
in response to displaying the virtual keyboard, suspend a hand tracking for tracking a shape of a hand including fingers via the camera (420).

3. The wearable device (101) of claim 1,
wherein the processor (120) is configured to:
based on the marker included in the image, identify a detection region, extended from the display region, including a virtual space in the image, and
identify the edge in the detection region by using the information representing the brightness difference.

4. The wearable device (101) of claim 3,
wherein the processor (120) is configured to:
identify the position of the external object, based on position information of the edge for a reference point of the display region included in the image,
wherein the reference point includes a vertex of the display region.

5. The wearable device (101) of claim 3,
wherein the edge is identified based on the information representing the brightness difference and a reference value for identifying the external object, and
wherein the reference value is identified based on at least one of a sharpness, a size, or a length of the visual object representing the external object.

6. The wearable device (101) of claim 1,
wherein the processor (120) is configured to:
identify an event for displaying the virtual keyboard in a virtual space displayed via the wearable device (101), and
in response to the event, transmit, to the external electronic device (480), a signal for requesting to display of the marker.

7. The wearable device (101) of claim 6,
wherein the processor (120) is configured to:
in response to identifying the event, identify whether a function of the external electronic device (480) executing the input function in response to the touch event is activated, or
in case that the function is activated, transmit, to the external electronic device (480), the signal for requesting to display of the marker.

8. The wearable device (101) of claim 1,
wherein the processor (120) is configured to:
in case that the state is a first state, display the virtual keyboard on a fixed region of a virtual space, and
in case that the stat is a second state different from the first state, display (the virtual keyboard) on a region identified based on position information and rotation information of the marker.

9. The wearable device (101) of claim 1,
wherein the processor (120) is configured to:
based on at least portion of a user input, change a size of the virtual keyboard.

10. The wearable device (101) of claim 1,
wherein the processor (120) is configured to:
based on identifying a difference between a position of the touch event and a position of the indicator is less than a reference range, execute the input function.

11. A wearable device (101) comprising:
communication circuitry (440);
a camera (420);
a display (430); and
a processor (120),
wherein the processor (120) is configured to:
obtain, from an external electronic device (480) connected via the communication circuitry (440), information on a marker displayed via the external electronic device (480);
display a virtual keyboard via the display (430) based on the marker identified using the information;
in a state displaying the virtual keyboard, identify an external object different from the external electronic device (480), by using an image of the camera (420);
based on identifying the external object adjacent to a display region of the external electronic device (480), display an indicator representing a position of the external object projected onto the virtual keyboard; and
based on receiving a signal for a touch event related to the display region from the external electronic device (480) via the communication circuitry (440), execute an input function based on the virtual keyboard.

12. The wearable device (101) of claim 11,
wherein the processor (120) is configured to:
in response to displaying of the virtual keyboard, deactivate a hand tracking for tracking a shape of a hand including fingers via the camera (420), and
based on information representing a brightness difference of each of pixels included in the image, identify the external object.

13. The wearable device (101) of claim 12,
wherein the processor (120) is configured to:
based on the image, identify a detection region extended from the display region, and
identify an edge of a visual object representing the external object in the detection region, by using the information representing the brightness difference.

14. The wearable device (101) of claim 13,
wherein the processor (120) is configured to:
identify the position of the external object, based on position information of the edge for a reference point of the display region included in the image,
wherein the reference point includes a vertex of the display region.

15. The wearable device (101) of claim 13,
wherein the edge includes a region where the brightness difference between adjacent pixels from among the pixels is greater than or equal to a reference brightness.
